(19)

**Europäisches Patentamt**
**European Patent Office**
**Office européen des brevets**

(11) **EP 4 657 423 A1**

(12) **EUROPEAN PATENT APPLICATION**

(43) Date of publication:
**03.12.2025 Bulletin 2025/49**

(21) Application number: **24178712.6**

(22) Date of filing: **29.05.2024**

(51) International Patent Classification (IPC):
**G09G 5/02** *(2006.01)* **H04N 21/434** *(2011.01)*
**H04N 21/435** *(2011.01)* **H04N 21/84** *(2011.01)*

(52) Cooperative Patent Classification (CPC):
**G09G 5/026; G06T 5/90; G09G 5/02; G09G 5/10;**
**H04N 19/85; G09G 2340/06**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Koninklijke Philips N.V.**
**5656 AG Eindhoven (NL)**

(72) Inventors:
- **BERENDSE, Danny**
  **5656 AG Eindhoven (NL)**
- **MERTENS, Mark Jozef Willem**
  **5656 AG Eindhoven (NL)**

(74) Representative: **Philips Intellectual Property &**
**Standards**
**High Tech Campus 52**
**5656 AG Eindhoven (NL)**

(54) **VISUAL ASSET STATE-DEPENDENT COORDINATED LUMINANCE PROCESSING**

(57) To enable technical coordination of brightnesses of several visual assets potentially from different source locations and potentially different creators, a compositor circuit (850) is arranged to receive the visual assets (810, 800) to create a geometric composition (comp),
wherein at least the second visual asset comprises at least a first luminance or luma mapping function (FL_DEF_2K) for transforming at least a luminance or luma of its pixel colors when the second visual asset is to be displayed as being in a first state (STLAB1int), and a second luminance or luma mapping function (FL_SEL_2K) when the second visual asset is to be displayed as being in a second state (STLAB2int), wherein the first and second luminance or luma mapping function are specified to give a conspicuous differential luminance appearance when mapping the second pixel colors of the second visual asset to a reference luminance range (RNG_RF);
wherein the compositor comprises:
- a state establishing circuit (851) arranged to establish a current state (CurST) of the second visual asset and is arranged to read a state-specific luminance or luma mapping function (FL_STSP) from the asset which satisfies the requirement that its associated state label corresponds to the current state.

Fig. 8

EP 4 657 423 A1

**Description**

FIELD OF THE INVENTION

The invention relates to improved color (specifically brightness) processing typically usable for luminance dynamic range-adjustment, which allows better coordinated combined presentation of a set of visual assets (potentially coming from different creators), e.g. in systems presenting a user interface which presents some pre-prepared assets (typically High luminance Dynamic Range assets) such as HDR still images, or HDR movie sequences, or moving images, or HDR textures or graphics and the like. With our world becoming ever more complex, and human vision being an efficient manner to in parallel digest a lot of information (some of which can be indicated as switchable states of the visual assets), it is expected that visual asset-based human computer interaction will play an important role necessitating good corresponding technology for defining/making and presenting such visual assets, and controlling them at least partly based on internal states of the assets (e.g. maintained by a running software code) and/or at least partly based on human-influenced software states via user interfaces. Such assets have to be elegantly defined, so that they can be used with good accuracy in a number of typical controlled applications involving visual asset presentation/display.

BACKGROUND OF THE INVENTION

A relatively complete insight and technology of high dynamic range image handling, has recently been developed in the video communication area, including movie creation and later television broadcasts. A HDR handling technical chain is only complete if one has available all the components available from HDR image creation (specification) up to HDR image display; this in contrast with systems which may initially generate an image of higher dynamic range than the reference -standard dynamic range legacy images- but then brightness map (a.k.a. down-grade) such "out-of-range" images back into the normal SDR range and format/definition (whether including some clipping or not), and then simply handle these SDR images.

For more than half a century, an image representation/coding technology which is now called **Low Dynamic Range (LDR)** or **Standard Dynamic Range (SDR)** worked perfectly fine for creating, communicating and displaying electronic images such as videos (i.e. temporally successive sequences of images). Colorimetrically, i.e. regarding the specification of the pixel colors, it was based on the technology which already worked fine decades before for photographic materials and paintings: one merely needed to be able to define, and display, most of the colors projecting out of an axis of achromatic colors (a.k.a. greys) which spans from black at the bottom end to the brightest achromatic color giving the impression to the viewer of being white. For television communication, which relies on an additive color creation mechanism at the display side, a triplet of red, green and blue color components needed to be communicated for each position on the display screen (pixel), since with a suitably proportioned triplet (e.g. 60%, 30%, 25%) one can make almost all colors, and in practice all needed colors (white being obtained by driving the three display channels to their maximum, with driving signal Rmax=Gmax=Bmax). In LDR there would be nothing brighter than white, whereas in **High Dynamic Range** technology one has been researching various manners to define and finally display some pixel colors brighter than 100% white.

The earliest television standards (NTSC, PAL) communicated the color components as three voltage signals (which defined the amount of a color component between 0 and 700mV), where the time positions along the voltage signal corresponded by using a scan path with pixels on the screen.

The control signals generated at the creation side, directly instructed what the display should make as <u>relative</u> proportion (apart from their being an accidental fixed gamma pre-correction at the transmitter, because the physics of the cathode ray tube took approximately a square power of the input voltage, which would have made the dark colors much blacker than they were intended e.g. as seen by a camera) at the creation side). So a 60%, 30%, 25% color (which is a dark red) in the scene being captured, would look substantially similar on the display, since it would be re-generated as a 60%, 30%, 25% color (note that the absolute brightness didn't matter much, since the eye of the viewer would adapt to the white and the average brightness of the colors being displayed on the screen). One can call this "direct link driving", without further color processing (except for arbitrary and unnecessary processing a display maker might still perform to e.g. make his sky look more blue-ish). For reasons of backwards compatibility with the older black and white television broadcasts, instead of actually communicating a red, green and blue voltage signal, a brightness signal and two color difference signals called chroma were transmitted (in current nomenclature the blue chroma Cb, and the red chroma Cr (excess redness in the color)). The relationship between RGB and YCbCr is an easy one, namely they can be calculated into each other by using a simple fixed 3x3 matrix (the coefficients of which depend on the emission spectra of the elected three primaries, and are standardized, i.e. also to be emulated electronically internally by LCDs which actually may have different optical characteristics, so that from image communication point of view all SDR displays are alike).

These voltage signals were later for digital television (MPEG-based et al.) digitized, as prescribed in standard Rec. 709, and one defined the various amounts of e.g. the brightness component with an 8 bit code word, 0 coding for the darkest color (i.e. black), and 255 for white. Note that coded video signals need not be compressed in all situations (although they oftentimes are). In case they are we will use the wording compression (e.g. by MPEG-HEVC, AV1 etc.), not to be confused with the act of "compressing" colors in a smaller gamut respectively range. By brightness we mean the part of the color definition that will impact upon the colors (to be, or when) displayed the visual property of being darker respectively brighter. In the light of the present technologies, it is important to correctly understand that there can be two kinds of brightnesses: relative brightness (as a percentage of something, which may be undefined until a choice is made, e.g. by the consumer buying a certain display, and setting its brightness setting to e.g. 120%, which will make e.g. the backlight emit a certain amount of light, and so also the white and colored pixels), and on the other hand absolute brightness. The latter can be characterized by the universal physical quantity luminance (which is measured technically in the unit nit, which is also candela per square meter). The luminance can be stated as an amount of photons coming out of a patch on an object, such as a pixel on the screen, towards the eye (and it is related to the lighting concept of illuminance, since such patch will receive a certain illuminance, and send some fraction of it towards the viewer).

Recently two unrelated technologies have emerged, which only came together because people argued that one might as well in one go improve the visual quality of images on all aspects, but those two technologies have quite different technical aspects.

On the one hand there was a strive towards wide gamut image technology (wide chromatic gamut, enabling the specification of highly saturated colors, or colorful colors, even if of moderate brightness). It can be shown that only colors can be made which lie within the triangle spanned by the red, green and blue primaries, and nothing outside. But one chose (EBU, also re-standardized in Rec. 709) primaries (originally phosphors for the CRT, later color filters in the LCD, etc.) which lay relatively close to the spectral locus of all existing colors, so one could make sufficiently saturated colors for most purposes. Saturation specifies how far away a color lies from the achromatic (colorless) colors, i.e. how much "color" there is. However, recently one wanted to be able to use novel displays with more saturated primaries (e.g. DCI_P3, or Rec. 2020), so that one also needed to be able to represent colors in such wider color spaces. A color space is the mathematical 3D space to represent colors (defining geometric positions of colors by coordinate numbers, e.g. a red, green and blue value of the weighed combination of primary intensities in the produced total color), often presented in such a shape that the base is defined by the triangle of 3 primaries. Color model refers to the election of the categories of numerical values one uses to define the space, e.g. red, green and blue being a natural representation for specifying additive color generators, yet the same colors can be defined by three other coordinate ranges in the Hue, Saturation, and Value model, which model characterizes the colors in a more human-related manner. For the technical discussion we may better use the word color gamut, which is the set of all colors that can be technically defined or displayed (i.e. a space may be e.g. a 3D coordinate system going to infinity whereas the gamut may be a cube or tent-shape of some size in that space). When dealing with the brightness aspect only, one can talk about brightness or luminance range (more commonly worded as "dynamic range", spanning from some minimum brightness to its maximum brightness). Presented HDR technologies will not primarily be about chromatic (i.e. color per se, such as more specifically its saturation) aspects, but rather about brightness aspects, so chromatic aspects will only be mentioned to the extent needed for aspects or embodiments in which they are relevant.

A more important new technology (than wide gamut) is **High Dynamic Range (HDR).** This should not be construed as necessarily "exactly this high" (since there can be many variants of HDR representations, with successively higher luminance range maximum), but rather as "higher than the reference/legacy representation: SDR". Since there are new coding concepts needed, one may also discriminate HDR from SDR by aspects of the technical details of the representation, e.g. the video signal. One difference of absolute HDR systems is that they define a unique luminance for each image pixel (e.g. a pixel in an image object being a white dog in the sun may be 550 nit), where SDR signals only had relative brightness definitions (so the dog would happen look e.g. 75 nit (corresponding to 94%) on somebody's computer monitor which could maximally show 80 nit, but it would display at 234 nit on a 250 nit SDR display (yet the viewer would not typically see any difference in the look of the image, unless having those displays side by side). I.e., whichever actual manner of coding the HDR image coder applies (e.g. as regards the format of the pixel color triplets, an RGB representation or alternatively a Y'CbCr representation), absolute HDR image or video coding allows the receiving side to state a definite luminance value for each pixel of the received image, whereas the relative systems cannot (when receiving relative images decoders can decide to display the pixel at some "arbitrary" luminance, but cannot decode an agreed luminance from the encoder). I.e. the reader should not confuse luminances as they exist (ultimately) at the front of any display, originating from the act of displaying the image, with luminances as are defined (i.e. establishable) on an image signal itself, i.e. even when that is e.g. stored but not displayed. Other differences are metadata that any flavor of HDR signal may have, but not the SDR signal. I.e. the coding of the signal will also indicate differences with SDR. And, ultimately there would be a chain of all-HDR apparatuses: an apparatus (e.g. camera) for generating HDR (i.e. e.g. > 10,000:1) images, an HDR video communication system, and an HDR end-user display to see the images (and anything additional in between, like e.g. grading software, should also be HDR-capable).

Colorimetrically, HDR images can represent brighter colors than SDR images, so in particular brighter than (Lambertian reflecting) white colors (i.e. e.g. glowing whites). Or in other words, the (luminance) dynamic range will be larger. The SDR signal as it was defined for digital image communication can represent (code) a dynamic range of about 1000:1. How much dynamic range is actually visible when displaying, will depend inter alia on the amount of surround light reflecting on the front of the display (and could be as bad as 50:1). The technical definition of the SDR signal format just doesn't allow more dynamic range. Typically that SDR luminance range may display between (approximately) 0.1 nit minimum well-visible black and (approximately) 100 nit white (minor variations in displaying won't matter much to the viewer, because of visual adaptation). This corresponds to a well lit (single lighting level) capturing environment of a scene, but in general and free capturing there may be e.g. a 100:1 luminance range indoors, but also a 100:1 range outdoors in the sun, of objects which are about 100x brighter than the indoors objects (2 lighting setups scenes).

Now if one wants to represent e.g. 10,000:1, one must resort to making a new HDR image format definition (we may in general use the word signal if the image representation is being or to be communicated rather than e.g. merely existing in the creating IC, and in general signaling will also have its own formatting and packaging, and may employ further techniques depending on the communication mechanism such as modulation).

Depending on the situation, the human eye can easily see (even if all on a screen in front of the viewer corresponding to a small glare angle) 100,000:1 (e.g. 10,000 nit maximum and 0.1 minimum, which is a good black level for television home viewing, i.e. in a dim room which only support lighting of a relatively low level, such as in the evening). If a dynamic range is characterized only by a **maximum luminance (ML),** it is typically defined relating to an assumed fixed reference minimum black (MB) luminance, e.g. 0.1 nit. In some scenarios one may also apply further principles and novel technology to the darkest colors of images (the blacks), however in many applications or systems it is assumed that the dark colors of the HDR images behave like those of the SDR image (or are not critically cared about), and the various technical components and approaches focus on the brighter (and middle) colors instead. Note that it is not necessary that all images as created by a creative (human or automaton) go as high as e.g. the maximum luminance of the entire video (ML_V). (S)he may elect to make the brightest image pixel in an image or the video e.g. 1000 nit.

The luminance of SDR white for videos (a.k.a. the SDR White Point Luminance (WPL) or maximum luminance (ML)), is standardized in video tech to be 100 nit (not to be confused with the reference luminance of white text in 1000 nit HDR images being typically 200 nit, i.e. a Lambertian white level in typical HDR images). I.e., a 1000 nit ML HDR image representation can make up to 10x brighter (glowing) object colors than an absolute SDR image. What one can content-wise, i.e. image object-wise, make with this are e.g. specular reflections on metals, such as a boundary of a metal window frame: in SDR the luminance has to end at 100 nit, making them visually on slightly brighter than the e.g. 70 nit light gray colors of the part of the window frame that does not specularly reflect. In HDR one can make those pixels that reflect the light source to the eye e.g. 900 nit, making them glow nicely giving a naturalistic look to the image as if it were a real scene. The same can be done with fireballs, light bulbs of a Christmas decoration in a garden, etc. This regards the definition of images; how a display which can only display whites as bright as 650 nit (i.e. the **display maximum luminance ML_D** rather than the video or content maximum luminance ML_V) is to actually display the images is an entirely different matter, namely one of **display adaptation a.k.a. display tuning,** not a matter of image (de)coding. However, the display will usually try to display as close as possible to the ideal displaying as far as the display capabilities allow (e.g. darker pixel luminances of an image may be displayed equi-luminance i.e. with the luminances as coded in the received image). Also the relationship with how a camera captures HDR scene colors may be tight or loose: we will in general assume that HDR colors have already been defined in the HDR image when talking about such technologies as coding, communication, dynamic range conversion and the like. In fact, the original camera-captured colors or specifically their luminances may have been changed into different values by e.g. a human **color grader** (who defines the ultimate look of an image, i.e. which color triplet values each pixel color of the image(s) should have), or some automatic algorithm. In fact, cameras normally don't even capture actual luminances, but linear brightness proportions. So we are typically talking about the coding of an HDR image grading, the brightnesses or luminances of that image, and the dynamic range of that image (per se, i.e. as it should ideally be displayed, on any display that has a capability to display the minimum and maximum luminance as prescribed in the image). If a color grader (human or automatic) considers in that image a 4000 nit sun disk pixel to be bright enough, it is for the majority of the technical discussions (apart from when they e.g. specifically deal with camera technologies) irrelevant what number the camera captured for the sun disk, let alone the original luminance of the sun in the captured scene. As regards the chromatic aspects, of wide gamut image technology, already for the fact that the chromatic gamut size may stretch with less than a factor 2, whereas the brightness range e.g. luminance range may stretch by a factor 100, one expects different technical rationales and solutions for the two improvement technologies. So we are mainly dealing with the height of the 3D gamut (or in a cube the diagonal distance from the zero vertex), on which vertical axis of achromatic greys we can locate the range of all luminances, e.g. all luminances codeable, or present in an image.

A HDR image may be associated with a metadatum called mastering display white point luminance (MDWPL), another technical name for a definition of the video-related maximum luminance ML_V. This value, which is typically communicated in metadata of the signal, and is a characterizer of the HDR video images (rather than of a specific display, as it is an element of a virtual display associated specifically with the video, being some ideal intended display for which the video pixel colors have been optimized to be conforming). This is an electable parameter of the video, which can be contemplated as similar to the election of the painting canvas aspect ratio by a painter: first the painter chooses an appropriate AR, e.g. 4:1 for painting a landscape, or 1:1 when he wants to make a still life, and thereafter he starts to optimally position all his objects in that elected painting canvas. In an HDR image the creator will then, after having established that the MDWPL is e.g. 5000 nit, make his secondary elections that in a specific scene this lamp shade should be at 700 nit, the flames in the hearth distributed around 500 nit, etc.

The primary visual aspect of HDR images is (since the blacks are more tricky) the additional bright colors (so one can define ranges with only a MDWPL value, if one assumes the bottom luminance to be fixed to e.g. 0.1 nit). However, HDR image creation can also involve deeper blacks, up to as deep as e.g. 0.0001 nit (although that is mostly relevant for dark viewing environments, such as in cinema theatres).

The other objects, e.g. the objects which merely reflect the scene light, will be coordinated to be e.g. at least 40x darker in a 5000 nit MDWPL graded video, and e.g. at least 20x darker in a 2000 nit video, etc. So the distribution of all image pixel luminances will typically depend on the MDWPL value (not making most of the pixels very bright).

The digital coding of the brightness, involves a technical quantity called **luma** (Y). We will give luminances the letter L, and (relative) brightnesses the letter B. Note that technically, e.g. for ease of definition of some operations, one can always normalize even 5000 nit WPDPL range luminances to the normalized range [0,1], but that doesn't detract from the fact that these normalized luminances still represent absolute luminances on a range ending at 5000 nit (in contrast to relative brightnesses that never had any clear associated absolute luminance value, and can only be converted to luminances ad hoc, typically with some arbitrary value).

For SDR signals the luma coding used a so-called Opto-electronic Transfer Function (OETF), between the optical brightnesses and the electronic typically 8 bit luma codes which (approximately) by definition was:

Y_float = sqrt (B_relative).
If B_relative is a float number ranging from 0 to 1.0, so will Y_float.

Subsequently that signal value Y_float is quantized, because we want 8 bit digital representations, ergo, the Y_dig value that is communicated to receivers over e.g. airways DVB (or internet-supplied video on demand, or blu-ray disk, etc.) has a value between 0 and 255 (i.e. power(2;8)-1).

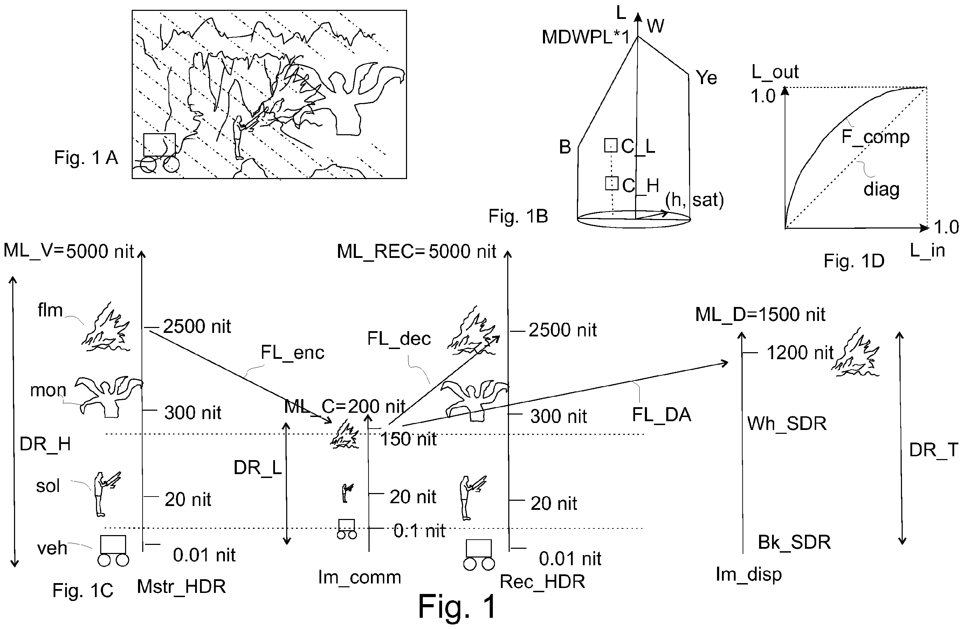

One can show the gamut of all SDR colors (or similarly one can show gamuts of HDR colors, which would if using the same RGB primaries defining the chromatic gamut have the same base, but after renormalization to absolute nit values stretch vertically to a larger absolute gamut solid) as in **Fig. 1B.** When both luminance ranges are normalized to 1.0 as maximum (by dividing by their respective MDWPL value), the HDR and SDR gamut would overlap, and a luminance mapping can be shown as a change in height of the color point in the gamut. Larger Cb and Cr values will lead to a (psychovisually more relevant color characterizer) larger saturation (sat), which moves outwards from the unsaturated or colorless colors vertical axis showing the achromatic colors in the middle, towards the maximally saturated colors on the circle (which is a transformation of the usual color triangle spanned by the RGB primaries as vertices). Hues h (i.e. the color category, yellows, versus greens, versus blues) will be angles along the circle. The vertical axis represents <u>normalized luminances</u> (in a linear gamut representation), or <u>normalized lumas</u> (in a non-linear representation (coding) of those luminances, e.g via a psychovisually uniformized OETF or its inverse the EOTF). Since after normalization (i.e. division by the respective MDWPL values, e.g. 2000 for an HDR image of a particular video and 100 for an SDR image), the common representation will become easy, and one can define luminance (or luma) mapping functions on normalized axes as shown in **Fig. 1D** (i.e. which function F_comp re-distributes the various image object pixel values as needed, so that in the actual luminance representation e.g. a dark object looks the same, i.e. has the same luminance, but a different <u>normalized</u> luminance since in one situation a pixel normalized luminance will get multiplied by 100 and in the other situation by 2000, so to get the same end luminance the latter pixel should have a normalized luminance of 1/20th of the former). When down-grading to a smaller range of luminances, one will typically get (in the normalized to 1.0 representation, i.e. mapping a range of normalized input luminances L_in between zero and one to normalized output luminances L_out) a compressive function (typically having a smaller than 45 degree angle for the brighter colors at least when shown in a luminance-luminance plot) which everywhere lies above the diagonal diag, but the exact shape of that function F_comp, e.g. how fact it has to rise at the blacks, will depend typically not only on the two MDWPL values, but (to have the most perfect re-grading technology version) also on the scene contents of various (video or still) images, e.g. whether the scene is a dark cave, and there is action happening in a shadowy area, which must still be reasonably visible even on 100 nit luminance ranges (hence the strong boost of the blacks for such a scenario, compared to a daylight scene which may employ a near linear function almost overlapping with the diagonal). Such a function may be called a concave function, when using the mathematical definition according to the concaveness of the hypograph. If the luminance re-grading has to go in the opposite direction, i.e. up-grading from a lower dynamic range image to a higher dynamic range image, a convex function will be used (using the mathematical definition that any line connecting two distinct points of the function, i.e. its locus of points, will lie above the function).

In the representation of Fig. 1B one can show the mapping from a HDR color (C_H) to an LDR color (C_L) of a pixel as a vertical shift (assuming that both colors should have the same proper color, i.e. hue and saturation, which usually is the desired technical requirement, i.e. on the circular ground plane they will project to the same point). Ye means the color yellow, and its complementary color on the opposite side of the achromatic axis of luminances (or lumas) is blue (B), and W signifies white (the brightest color in the gamut a.k.a. the white point of the gamut, with the darkest colors, the blacks being at the bottom).

So the receiving side (in the old days, or today) will know it has an SDR video, if it gets this format. The maximum white (of SDR) will be by definition the brightest color that SDR can define. So if one now wants to make brighter image colors (e.g of real luminous lamps), that should be done with a different codec (as one can show the math of the Rec. 709 OETF allows only a coding of up to 1000: 1 and no more).

So one defined new frameworks with different code allocation functions (EOTFs, or OETFs). What is of interest here is primarily the definition of the luma codes.

For reasons beyond what is needed for the present discussion, most HDR codecs start by defining an Electro-optical transfer function instead of its inverse, the OETF. Then one can at least basically define brighter (and darker) colors. That as such is not enough for a professional HDR coding system, since because it is different from SDR, and there are even various flavors, one wants more (new compared to SDR coding) technical information relating to the HDR images, which will be metadata. The property of those HDR EOTFs is that they are much steeper, to encode a much larger range of needed to be coded HDR luminances, and a significant part of that range coding specifically darker colors (relatively darker, since although one may be coding absolute luminances with e.g. the **Perceptual Quantizer (PO) EOTF (standardized in SMPTE 2084)**, one applies the function after normalization). In fact if one were to use exact power functions as EOTFs for coding HDR luminances as HDR lumas, one would use a power of 4, or even 7. When a receiver gets a video image signal defined by such an EOTF (e.g. Perceptual Quantizer) it will know it gets a HDR video. It will need the EOTF to be able to decode the pixel lumas in the plane of lumas spanning the image (i.e. having a width of e.g. 4000 pixels and a height of 2000), which will simply be binary numbers. Typically HDR images will also have a larger word length, e.g. 10 bit. However, one should not confuse the non-linear coding one can at will design by optimizing a non-linear EOTF shape with linear codings and the amount of bits needed for them. If one needs to drive, with a linear (bit-represented) code, e.g. a DMD pixel, indeed to reach e.g. 10000: 1 modulation darkest to brightest, one needs to take the log2 to obtain the number of bits. There one would need to have at least 14 bits (which may for technical reasons get rounded upwards to 16 bits), since power(2;14)= 16384 > 10000. But being able to smartly design the shape of the EOTF, and knowing that the visual system sees not all luminance differences equally, the present applicant has shown that (surprisingly) quite reasonable HDR television signals can be communicated with only 8 bit per pixel color component (of course if technically achievable in a system, 10 bits may be better and more preferable). So the receiving side may in both situations get as input a coded pixel color (luma and Cb, Cr; or in some systems by matrixing equivalent non-linear R'G'B' component values) which lie between 0 and 255, or 0 and 1023, but it will know the kind of signal it is getting (hence what ought to be displayed) from the metadata, such as the metadata (e.g. MPEG VUI metadata) co-communicated EOTF (e.g. a value 16 meaning PQ; 18 means another OETF was used to create the lumas, namely the Hybrid LogGamma OETF, ergo the inverse of that function should be used to decode the luma plane), in many HDR codings the MDWPL value (e.g. 2000 nit), and in more advanced HDR codings further metadata (some may e.g. co-encode luminance -or luma- mapping functions to apply for mapping image luminances from a primary luminance dynamic range to a secondary luminance dynamic range, such as one function FL_enc per image).

We detail the typical needs of an already more sophisticated HDR image handling chain with the aid of simple elucidation **Fig. 1** (for a typical nice HDR scene image, of a monster being fought in a cave with a flame thrower, the **master grading** (Mstr_HDR) of which is shown spatially in Fig. 1A, and the range of occurring pixel luminances on the left of Fig. 1C). The master grading or master graded image is where the image creator can make his image look as impressive (e.g. realistic) as desired. E.g., in a Christmas movie he can make a baker's shop window look somewhat illuminated by making the yellow walls somewhat brighter than paper white, e.g. 150 nit (and real colorful yellow instead of pale yellow), and the light bulbs can be made 900 nit (which will give a really lit Christmas-like look to the image, instead of a dull one in which all lights are clipped white, and not much more bright than the rest of the image objects, such as the green of the Christmas tree). In general all aspects of the look, be they dark colors, or fine gradients, etc., can be tuned as desired, in principle, or at least as visually reasonable (e.g. an image that is signed off as being okay by somebody working as or for the creator). When somebody in the video is wearing a white shirt, the master grader (especially when a human, or at least a smart algorithm) can make the lit parts of the shirt realistically brighter than the shadowy parts (which should still look white), either as percentages or nits, rather than that a dumb algorithm that would make the unlit whites e.g. 90 nit and the lit ones 1000 nit, which would look visually unrealistic. Also down-converted gradings where e.g. the brown color of a sunlit part of a wooden object is bleached away may be less preferable than a bright color which still has some brown in it. So at least for some usage scenarios the specifics of the various gradings of the object luminances and colors may be relatively critical, and hence the various technologies handling such images must be able to reasonably cope with those technical desiderata.

So the basic thing one must be able to do is encode (and typically also decode and display) brighter image objects than in a typical SDR image.

Let's look at it colorimetrically now. **SDR** (and its coding and signaling) was designed to be able to communicate any Lambertian reflecting color (i.e. a typical object, like your blue jeans pants, which absorbs some of the infalling light, e.g. the red and green wavelengths, to emit only blue light to the viewer or capturing camera) under good uniform lighting (of the scene where the action is camera-captured). Just like we would do on a painting: if we don't add paint we get the full brightness reflecting back from the white painting canvas, and if we add a thick layer of strongly absorbing paint we will see a black stroke or dot. We can represent all colors brighter than blackest black and darker than white in a so-called color gamut of representable colors, as in Fig. 1B (the "tent"). As a bottom plane, we have a circle of all representable chromaticities (note that one can have long discussions that in a typical RGB system this should be a triangle, but those details are beyond the needs of the present teachings). A chromaticity is composed of a certain (rotation angle) hue h (e.g. bluish-green e.g. "teal"), and a saturation sat, which is the amount of pure color mixed in a grey, e.g. the distance from the vertical axis in the middle which represents all achromatic colors from black at the bottom becoming increasingly bright till we arrive at white. Chromatic colors, e.g. a half-saturated purple, can also have a brightness, the same color being somewhat darker or brighter. However, the brightest color in an additive system can only be (colorless) white, since it is made by setting all color channels to maximum R=G=B=255, ergo, there is no unbalance which would make the color clearly red (there is still a little bit of bluishness respectively yellowishness in the elected white point chromaticity, but that is also an unnecessary further discussion, we will assume D65 daylight white). We can define those SDR colors by setting MDWPL a (relative) 100% for white W (n.b., in legacy SDR white does not actually have a luminance, since legacy SDR does not have a luminance associated with the image, but we can pretend it to be X nit, e.g. typically 100 nit, which is good average representative value of the various legacy SDR tv's). Anything darker than about 5% might start looking black-ish. So especially when we try to make a high quality HDR image for display of e.g. a street view of houses through which a corridor with shops runs towards the distance, the lower light level in the corridor might look black in SDR. One of the technical goals of HDR would be to keep the look of these shops under better control, but that would involve quite some technical insights to use appropriately compared to the much simpler SDR video handling. In case one was e.g. shooting a cave in SDR, one would during capturing ensure that everything would be nicely, evenly lit, by placing light sources everywhere in the cave. Where the light didn't reach you would get black regions clipped below minimum black where nothing was to be seen, and bright objects like flames could clip above 100% white. In HDR, one of the ambitions one may want to realize with the new technology is to capture, code and communicate, and display real life complexly lit environments realistically almost as they are, or at least better than SDR in simpler variants, but that additional complexity requires a number of new video technologies to get things working fine instead of badly.

In HDR one more specifically wants to represent brighter than Lambertian colors, e.g. the self-luminous flame object (flm) of the flame thrower of the soldier (sol) fighting the monster (mon) in this dark cave.

Let's say we define a (video maximum luminance ML_V) 5000 nit master HDR grading. **Master** means the starting (typically most important, when having various re-graded images of a same scene) image - in this case best quality grading- which we will optimally grade first, to define the look of this HDR scene image, and from which we can derive secondary gradings a.k.a. graded images as needed. We will for simplicity talk about what happens to (universal) luminances, then we can for now leave the debate about the corresponding luma codes out of the discussion, and indeed PQ can code between 1/10,000 nit and 10,000 nit, so there is no problem communicating those graded pixel luminances as a e.g. 10 bit per component YCbCr pixelized HDR image, if coding according to that PQ EOTF (of course, the mappings can also be represented, and e.g. implemented in the processing IC units, as an equivalent luma mapping).

The two dotted horizontal lines represent the limitations of the SDR codable image, when associating 100 nit with the 100% of SDR white.

Although in a cave, the monster will be strongly illuminated by the light of the flames, so we will give it an (average) luminance of 300 nit (with some spread, due to the square power law of light dimming, skin texture, etc.).

The soldier may be 20 nit, since that is a nicely slightly dark value, still giving some good basic visibility.

A vehicle (veh) may be hidden in some shadowy corner, and therefore in an archetypical good impact HDR scene of a cave e.g. have a luminance of 0.01 nit. The flames one may want to make impressively bright (though not too exaggerated). On an available 5000 nit HDR range, we could elect 2500 nit, around which we could still gradually make some darker and brighter parts, but all nicely colorful (yellow and maybe some oranges).

What would now happen in a typical SDR representation, e.g. a straight from camera SDR image capturing?

The camera operator would open his iris so that the soldier comes out at "20 nit", or in fact more precisely 20%. Since the flames are much brighter (note: we didn't actually show the real-world scene luminances, since master HDR video Mstr_HDR is already an optimal grading to have best impact in a typical living room viewing scenario, but also in the real world the flames would be quite brighter than the soldier, and certainly the vehicle), they would all clip to maximum white. So we would see a bright area, without any details, and also not yellow, since yellow must have a lower luminance (of course the cinematographer may optimize things so that there is still somewhat of a flame visible even in LDR, but then that is firstly never as impactful extra bright, and secondly at the detriment of the other objects which must become darker).

The same would also happen if we built an SDR (max. 100 nit) TV which would map equi-luminance, i.e. it would accurately represent all luminances of the master HDR grading it can represent, but clip all brighter object pixel luminances to 100 nit white.

So the usual paradigm in the LDR era was to relatively map, i.e. the brightest brightness (here luminance) of the received image to the maximum capability of the display ("white-on-white", which in the previous century would happen automatically due to the electronic driving of the display). In this manner, e.g. a white bridal gown would look nicely white on the LDR display.

As such a white-on-white approach when used for novel HDR images would map 5000 nit by division by 50 on 100 nit, the flames would still be okay since they are spread as yellows and oranges around 50 nit (which is a brightness representable for a yellow, since as we see in Fig. 1B the gamut tent for yellows goes down in luminance only a little bit when going towards the most saturated yellows, in contrast to blues (B) on the other side of the slice for this hue angle B-Ye, which blues can only be made in relatively dark versions). However, this would be at the detriment of everything else becoming quite dark, e.g. the soldier 20/50 nit which is pure black (and this is typically a problem that we see in SDR renderings of such kinds of movie scene). Some more advanced approach would be preferable.

So, if having established a good HDR maximum luminance (i.e. ML_V) for the master grading, and a good EOTF e.g. PQ for coding it, we can in principle start communicating HDR images to receivers, e.g. consumer television displays, computers, cinema projectors, etc.

But that is only the most basic system of HDR.

The problem is that, unless the receiving side has a display which can display pixels at least as bright as 5000 nit, there is still a question of how to display those pixels.

Some (DR adaptation) luminance down-mapping must be performed in the TV, to make darker pixels which are displayable. E.g. if the display has a (end-user) display maximum luminance ML_D of 1500 nit, one could somehow try to calculate 1200 nit yellow pixels for the flame (potentially with errors, like some discoloration, e.g. changing the oranges into yellows).

This luminance down-mapping is not really an easy task, especially to do very accurately instead of sufficiently well, and therefore various technologies have been invented (also for the not necessarily similar task of luminance up-mapping, to create an output image of larger dynamic range and in particular maximum luminance than the input image).

Typically one wants a mapping function (generically, i.e. used for simplicity of elucidation) of a concave shape in a normalized luminance (or brightness) plot, as shown in Fig. 1D. Both input and output luminances are defined here on a range normalized to a maximum equaling one, but one must mind that on the input axis this one corresponds to e.g. 5000 nit, and on the output axis e.g. 200 nit (which to and fro can be easily implemented by division respectfully multiplication). In such a normalized representation the darkest colors will typically be too dark for the grading with the lower dynamic range of the two images (here for down-conversion shown on the vertical output axis, of normalized output luminances L_out, the horizontal axis showing all possible normalized input luminances L_in). Ergo, to have a satisfactory output image corresponding to the input image, we must relatively boost those darkest luminances, e.g. by multiplying by 3x, which is the slope of this luminance compression function F_comp for its darkest end. But one cannot boost forever if one wants no colors to be clipped to maximum output, ergo, the curve must get an increasingly lower slope for brighter input luminances, e.g. it may typically map input 1.0 to output 1.0. In any case the luminance compression function F_comp for down-grading will lie above the 45 degree diagonal (diag) typically.

Care must still be taken to do this correctly. E.g., some people like to apply three such compressive functions to the three red, green and blue color channels separately. Whilst this is a nice and easy guarantee that all colors will fit in the output gamut (an RGB cube, which in chromaticity-luminance (L) view becomes the tent of Fig. 1B) especially with higher non-linearities it can lead to significant color errors. A e.g. reddish orange hue is determined by the percentage of red and green, e.g. 30% green and 70% red. If the 30% now gets doubled by the mapping function, but the red stays in the feeble-sloped part of the mapping function almost unchanged, we will have a 60/70, i.e. 50/50 i.e. a yellow instead of an orange. This can be particularly annoying if it depends on (in contrast to the SDR paradigm) non-uniform scene lighting, e.g. a sports car entering the shadows suddenly turning yellow.

Ergo, whilst the general desired shape for the brightening of the colors may still be the function F_comp (e.g. determined by the video creator, when grading a secondary image corresponding to his master HDR image already optimally graded), one wants a more savvy down-mapping. As shown in Fig. 1B, for many scenarios one may desire a re-grading which merely changes the brightness of the normalized luminance component (L), but now the innate type of color, i.e. its chromaticity (hue and saturation). If both SDR and HDR are represented with the same red, green and blue color primaries, they will have a similarly shaped gamut tent, only one being higher than the other in absolute luminance representation. If one scales both gamuts with their respective MDWPL values (e.g. MDWPL1= 100 nit, and MDWPL2= 5000 nit), both gamuts will exactly overlap. The desired mapping from a HDR color C_H to a corresponding output SDR color C_L (or vice versa) will simply be a vertical shifting, whilst the projection on the chromaticity plane circle (i.e. the proper color of the pixel being its hue and its saturation) stays the same.

If it is now possible to down-grade with one (or more) luminance mapping functions (the shape of which may be optimized by the creator of the video(s)), in case one uses invertible functions one can design a more advanced HDR codec.

Instead of just making some final secondary grading from the master image, e.g. in a television, one can make a lower dynamic range image version for communication, **communication image Im_comm.** We have elected in the example this image to be defined with its communication image maximum luminance ML_C equal to 200 nit. The original 5000 nit image can then be reconstructed (a.k.a. decoded) as a reconstructed image Rec_HDR (i.e. with the same reconstructed image maximum luminance ML_REC) by receivers, if they receive in metadata the decoding luminance mapping function FL_dec, which is typically substantially the inverse of the coding luminance mapping function FL_enc, which was used by the encoder to map all pixel luminances of the master HDR image into corresponding lower pixel luminances of the communication image Im_comm. So the proxy image for actually communicating an image of a higher dynamic range (DR_H, e.g. spanning from 0.001 nit to 5000 nit) is an image of a different, lower dynamic range (DR_L).

Interestingly, one can even elect the communication image to be a 100 nit LDR (i.e. SDR) image, which is immediately ready (without further color processing) to be displayed on legacy LDR images (which is a great advantage, because legacy displays don't have HDR knowledge on board). How does that work? The legacy TV doesn't recognize the MDWPL metadatum (cos that didn't exist in the SDR video standard, so the TV is also not arranged to go look for it somewhere in the signal, e.g. in a Supplemental Enhancement Information message, which is MPEG's mechanism to introduce all kinds of pre-agreed new technical information). It is also not going to look for the function. It just looks at the YCbCr e.g. 1920x1080 pixel color array, and displays those colors as usual, i.e. according to the SDR Rec. 709 interpretation. And the creator has chosen in this particular codec embodiment his FL_enc function so that all colors, even the flame, map to reasonable colors on the limited SDR range. Note that, in contrast to a simple multiplicative change corresponding to the opening or shutting of a camera iris in an SDR production (which typically leads to clipping to at least one of white and/or black), now a very complicated optimal function shape can be elected, as long as it is invertible (e.g. we have taught systems with first a coarse pre-grading and then a fine-grading). E.g. one can move the luminance (respectively relative brightness) of the car to a level which is just barely visible in SDR, e.g. 1% deep black, whilst moving the flame to e.g. 90% (as long as everything stays invertible).

How do we now know that this is actually a HDR video signal, even if it contains an LDR-usable pixel color image, or in fact that any HDR-capable receiver can reconstruct it to HDR: because there are also the functions FL_dec in metadata, typically one per image. And hence that signal codes what is also colorimetrically, i.e. according to our above discussion and definition, a (5000 nit) HDR image.

Although already more complex than the basic system which communicates only a PQ-HDR image, this by SDR proxy coding is still not the best future-proof system, as it still leaves the receiving side to guess how to down-map the colors if it has e.g. a 1500 nit, or even a 550 nit, tv.

Therefore we added a further technical insight, and developed so-called display tuning technology (a.k.a. display adaptation): the image can be tuned for any possible connected tv, i.e. any ML_D, because one can double the function of the coding function FL_enc as some guidance function for the up-mapping from 100 nit Im_comm not to a 5000 nit reconstructed image, but to e.g. a 1500 nit image. The concave function, which is substantially the inverse of F_comp (note, for display adaptation there is no requirement of exact inversion as there is for reconstruction), will now have to be scaled to be somewhat less steep (i.e. from the reference decoding function FL_dec a **display adapted** luminance mapping function FL_DA will be calculated), since we expand to only 1500 nit instead of 5000 nit. I.e. an image of tertiary dynamic range (DR_T) can be calculated, e.g. optimized for a particular display in that the maximum luminance of that tertiary dynamic range is typically the same as the maximum displayable luminance of a particular display.

Techniques for display adaptation are described in WO2017108906 (we can transform a function of any shape into a similarly-shaped function which lies closer to the 45 degree diagonal, by an amount which depends on the ratio between the maximum luminances of the input image and the desired output image, versus the ratio of the maximum luminances of the input image and a reference image which would here be the reconstructed image, by e.g. using that ratio to obtain closer points on for all points on the diagonal orthogonally projecting a line segment from the respective diagonal point till it meets a point on the input function, which closer points together define the tuned output function, for calculating the to be displayed image Im_disp luminances from the Im_comm luminances).

Not only did we get more kinds of displays even for basic movie or television video content (LCD tv, mobile phone, home cinema projector, professional movie theatre digital projector), and more video different sources and communication media (satellite, streaming over the internet, e.g. OTT, streaming over 5G), but also did we get more production manners of video. In the future it is even expected that such applications as virtual reality may become more commonplace (in which the video information may be communicated as image-defining or 3D environment-defining assets rather than typical MPEG data), but e.g. when watching a video or game with a vizor, HDR techniques like the present will still be important, if not even more important when having more realistic image environments close to the eyes.

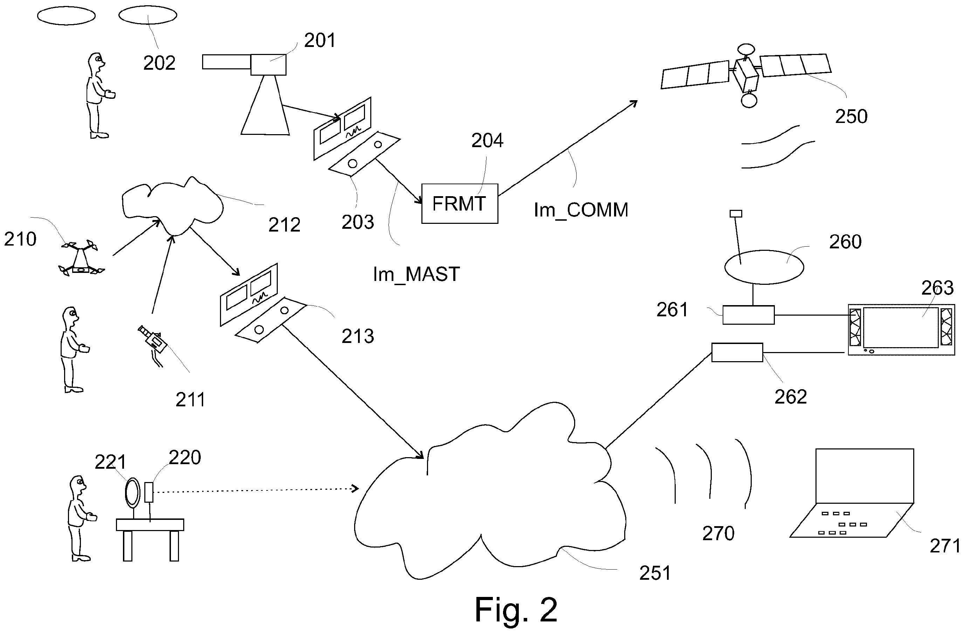

**Fig. 2** shows -in general, without desiring to be limiting- a few typical creation and communication scenarios of video wherein the present teachings may be usefully deployed. We merely elucidate the possible uses by examples, and in actual systems further components may be present such as aggregators, or re-distributors (which might apply transcoding), which may collect various life or prepared content.

In a studio environment, e.g. for the news or a comedy, there may still be a tightly controlled shooting environment (although HDR allows relaxation of this, and shooting in real environments). There will be controlled lighting (202), e.g. a battery of base lights on the ceiling, and various spotlights. There will be a number of bulky relatively stationary television cameras (201). Variations on this often real-time broadcast will be e.g. a sports show like soccer, which will have various types of cameras like near-the-goal cameras for a local view, overview cameras, drones, etc. In a biking competition cameras may be traveling on motorcycles and driving into dark tunnels etc.

There will be some production environment 203, in which the various feeds from the cameras can be selected to become the final feed, and various (typically simple, but potentially more complex) grading decisions can be taken. In the past this often happened in e.g. a production truck, which had many displays and various operators, but with internet-based workflows, where the raw feeds can travel via some network, the final composition may happen at the premises of the broadcaster. Finally, when simplifying the production for this elucidation, some coding and formatting for broadcast distribution to end (or intermediate, such as local cable stations) customers will happen in formatter 204. This will typically do the conversion to e.g. PQ YCbCr from the luminances as graded as explained with Fig. 1, for e.g. an intermediate dynamic range format, calculate and format all the needed metadata, convert to some broadcasting format like DVB or ATSC, packetize in chunks for distribution, etc. (the etc. indicating there may be tables added for signaling available content, sub-titling, encryption, but at least some of that will be of lesser interest to understand the details of the present technical innovations).

Typically, there will be a final product image (e.g. correctly brightness and color graded, for consumption in typical viewing scenarios), which is the master image Im_MAST. It may be that this master image itself is sent to any receiver, e.g. an end-consumer television display. But oftentimes colorimetrically and/or as regards signal format or definition, a different representative image or video is sent, the communication image Im_COMM. E.g. some backwards compatible systems, for broadcasters which still have many customers with legacy SDR televisions, may calculate an SDR proxy communication image(s) representing the master HDR image(s). These images will then be associatable with, usually co-communicated, brightness mapping function metadata, so that the receiving side can create higher dynamic range images again, e.g. reconstruct a close approximation (except for e.g. some minor quantization or compression artefacts) of the original master images.

In the example the video (a television broadcast in the example) is communicated via a television satellite 250 to a satellite dish 260 and a satellite signal capable set-top-box 261. Finally it will be displayed on an end-user display 263.

This display may be showing this first video, but it may also show other video feed, potentially even at the same time, e.g. in Picture-in-Picture windows (or some data of the first HDR video program may come via some distribution mechanism and other data via another).

A second production is typically an off-line production. We can think of a Hollywood movie, but it can also be a show of somebody having a race through a jungle. Such a production may be shot with other optimal cameras, e.g. steadicam 211 and drone 210. We again assume that the camera feeds (which may be raw, or already converted to some HDR production format like HLG) are stored somewhere on network 212, for later processing. In such a production we may in the last months of production have some human color grader use grading equipment 213 to determine the optimal luminances (or relative brightnesses in case of HLG production and coding) of the master grading. Then the video may be uploaded to some internet-based video service 251. For professional video distribution this may be e.g. Netflix.

A third example is consumer video production. Here the user will have e.g. when making a vlog a ring lighter 221, and will capture via a mobile phone 220, but (s)he may also be capturing in some exterior location without supplementary lighting. She/he will typically also upload to the internet, but now maybe to youtube, or tiktok, etc.

In case of reception via the internet, the display 263 will be connected via a modem, or router 262 or the like (more complicated setups like in-house wifi and the like are not shown in this mere elucidation).

Another user may be viewing the video content on a portable display (271), such as a laptop (or similarly other users may use a non-portable desktop PC), or a mobile phone etc. They may access the content over a wireless connection (270), such as Wifi, 5G, etc.

Current professional reference displays for viewing created video can go as high as ML_D = 10,000 nit. Even in the consumer arena, recently a 10,000 nit television has been demonstrated. So, if things evolve beneficially, we may see high quality HDR imagery being commonplace in various applications on not too long term. Note that cameras don't actually capture exact luminances, but rather relative brightnesses of a scene (due to the arbitrary selection of iris etc.), however, they have no problem capturing high dynamic ranges nowadays. Even standard cameras can at least faithfully capture 14 powers of two of differential brightness in a scene, and more advanced cameras with specialized sensor construction, or techniques such as multiple exposure can go well beyond this (e.g. 20 powers of two, which is a quite reasonable capturing dynamic range for most situations).

So it can be seen that today, various kinds of video, in various technical codings, can be generated and communicated in various manners, and our coding and processing systems have been designed to handle substantially all those variants. Whereas HDR started out in classical video image communication (a ready-graded 2D array of pixel colors called the image essence), it is foreseen that in the future HDR will move into more general applications of watchable content, such as web applications, virtual reality worlds (for a vizor), etc. In these applications instead of pixel arrays the various components of a scene, environment or world may come as (partial) **visual assets** (e.g. a texture to be mapped onto a geometrical shape, e.g. a set of triangles, or a User Interface or other graphics icon, etc.), to be composed e.g. on-the-fly, either in a server or in a user's terminal device (e.g. a mobile phone).

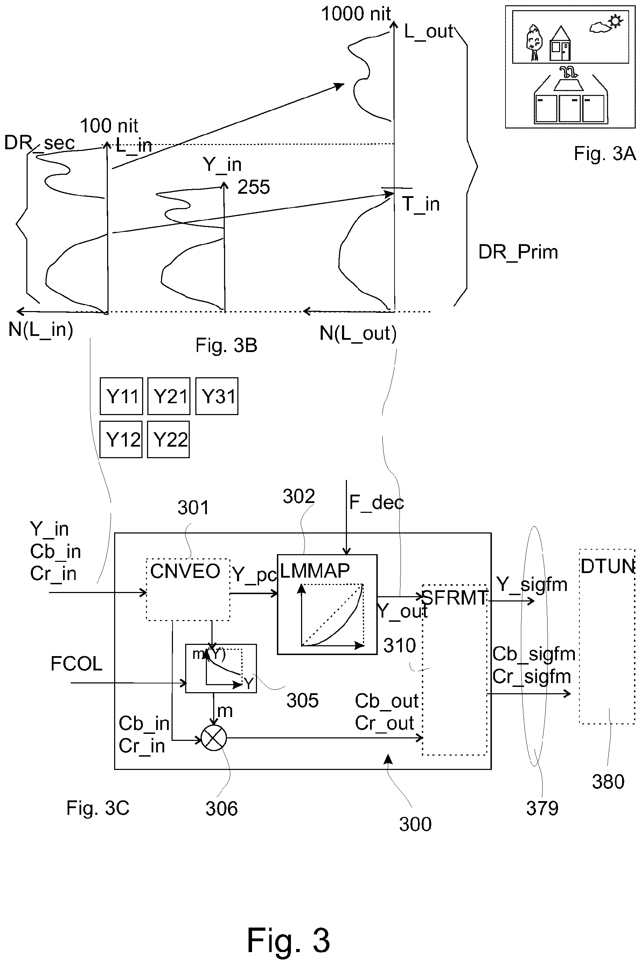

**Fig. 3** (comprising Fig. 3A, 3B, and 3C) shows an example (color mapping circuit variant) of an absolute (nit-level-defined) **dynamic range conversion circuit 300.** It is in this example used in a <u>decoder</u>, and more specifically (for elucidation, without limiting) for an application where an SDR proxy plus metadata comes in as a coding of a HDR image or video of images, which HDR image is to be reconstructed by using this dynamic range conversion circuit. This SDR proxy example should not be seen as a limitations, since there can be decoders which ingest a HDR image (e.g. a 1000 nit maximum luminance image), and they may have the ability to convert (decode) to a secondary maximum luminance grading, e.g. 100 nit SDR output. Primarily the circuit will take care of the (relative respectively absolute) mapping of the pixel brightnesses, and preferably in a manner so that the SDR image and the HDR image are visually reasonable differently graded looks of the same scene image, according to e.g. a human color grader, since typically the decoding/up-mapping function F_dec will (that is, in a scenario of SDR to HDR mapping) be a convex function which gives the brighter object colors an extra boost compared to the darker image colors, specified according to the desiderate of the color grader and typically co-communicated in metadata of the image. In general this function F_dec, although we elucidated with a simple typical example of its shape, may define any re-distribution of the various luminances of the different image objects (e.g. maintaining a certain contrast in a mist cloud in the image, etc.).

There can also be scenarios where a higher dynamic range image (e.g. of a pair of differently graded images of different maximum luminance) is received and a lower dynamic range version of the pair has to be calculated (in which case the down-grading luminance or luma mapping function will be essentially concave).

It is important that the reader well understands what is a (de)coding (as contrasting to other aspects of HDR image handling, such as e.g. the optimization before displaying of an image, once decoded), and how an absolute HDR image, or its pixel colors, is different from a legacy SDR image. The decoding to a typical secondary maximum luminance level specified or understandable from the coding can happen irrespective of consideration of any specific end-user display.

Although in some embodiments it may be beneficial to combine the two color operations of decoding and display adaptation (although in other colorimetric technical formulations that should not be done, as it may lead to technical issues), display adaptation is a possible second processing step after decoding per se -which is a different technical thing-namely, there may be a connection from the output of the decoder carrying the decoded HDR image to a display adaptation circuit 380, which calculates ultimate pixel colors and luminances to be displayed at the screen of some display, e.g. a 450 nit tv which some consumer has at home. The decoding is in general the standard process, which (apart from luma to luminance conversion and the like) for two-grading HDR systems typically involves the straightforward calculation of the secondary grading from the received pixel colors of the primary grading, by applying the received one or more luma or luminance mapping functions, whereas the display adaptation typically caters for various display capabilities, and involves the calculation of a secondary, display-specific luma mapping function based on the typically in metadata received luma mapping function (which guides what luminance re-distribution is optimal for the given HDR scene type image according to the creator/encoder).

In absolute HDR, one can establish pixel luminances already in the decoding step, at least for the output image (here the 1000 nit image). Display adaptation can happen by using one of several possible algorithms (the details of which only being relevant to certain specific teachings), of which one fixed display adaptation algorithm may typically be pre-designed in the receiving side circuit.

We have shown the (exemplary) decoding process per se in **Fig. 3B,** for some typical HDR image being an indoors/outdoors image (the geometry and comprised image objects of which are shown in Fig. 3A). Note that, whereas in the <u>real world</u> the outdoors luminances may typically be 100 times brighter than the indoors luminances, in an actual master graded HDR image it may be better to make them e.g. 10x brighter, since the viewer will be viewing all together on a screen, in a fixed viewing angle, even typically in a dimly illuminated room in the evening, and not in the real world.

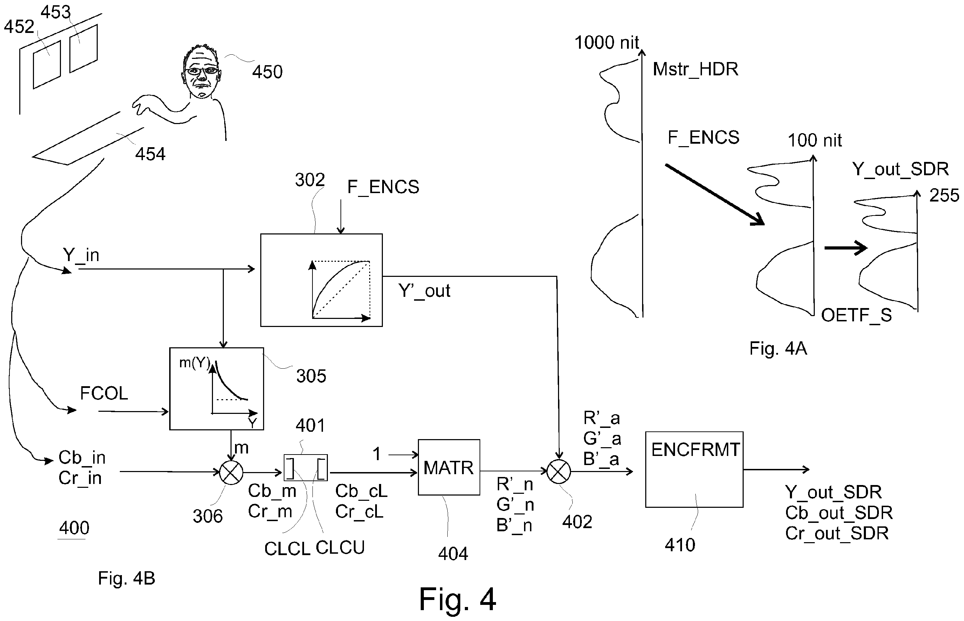

Nevertheless, we find that when we look at the luminances corresponding to the lumas, e.g. the HDR luminances L_out (e.g. of a reconstruction from an SDR proxy image as received), we typically see a large histogram (of counts N(L_out) of each occurring luminance in an output image of this homely scene). This spans considerably above some lower dynamic range lobe of luminances, and above the low dynamic range 100 nit level, because the sunny outdoors images have their own histogram lobe. Note that the luminance representation is drawn non-linearly (e.g. logarithmically) for convenience, since we need not details the specific numerics which depend inter alia on which image is being decoded. As explained below with Fig. 4, for a typically invertible system, the encoder would do at the encoding side the opposite mapping, when making the 100 nit proxy image (having its histogram of proxy luminance counts N(L_in)) of proxy luminances L_in. Also shown are the lumas Y_in, the value of which will also depend on the elected EOTF or OETF defining the relationship between lumas and luminances.

**Fig. 3C** shows a possible color calculation framework/circuit for decoding HDR images which in fact code a primary image (e.g. a master HDR grading) having a primary luminance dynamic range (DR Prim), but by actually communicating another image (so-called proxy) with a different secondary range of pixel luminances (DR_Sec). It may be advantageous to use as a proxy a 100 nit ML image, since then dumb legacy displays can simply display it yielding good or at least reasonably image object colors and brightnesses. If the encoder and all its supply-able decoders have pre-agreed or know that the proxy image has a maximum luminance of 100 nit, this need not be communicated as an SDR_WPL metadatum. If the proxy image is e.g. a 200 nit maximum image, this will typically be indicated by filling its proxy white point luminance P_WPL with the value 200, or similarly for 80 nit etc. The maximum of the primary image (HDR_WPL= 1000), to be reconstructed by the dynamic range conversion circuit, will normally be co-communicated as metadata of the received input image, or video signal, i.e. together with the input pixel color triplets (Y_in, Cb_in, Cr_in). The various pixel lumas will typically come in as a luma image plane, i.e. the sequential pixels will have first luma Y11, second luma Y21, third luma Y31, and one pixel row below fourth luma Y12 and fifth luma Y22, etc. (same for the chroma components). Typically these color code values will be scanned, e.g. by means of a zig-zag scan, and the dynamic range conversion circuit will convert pixel by pixel to output pixel color triplets (Y_out, Cb_out, Cr_out). We will primarily focus on the brightness dimension of the pixel colors in this elucidation, unless certain chromatic aspects of the innovation are important. Various dynamic range conversion circuits may internally work differently, to achieve basically the same thing: a correctly reconstructed output luminance L_out for all image pixels (the actual details don't matter for this innovation, and the embodiments will focus on teaching only aspects as far as needed).

The mapping of luminances from the secondary dynamic range to the primary dynamic range may happen on the luminances themselves, but also on any luma representation (i.e. according to any EOTF, or OETF). The internal luma representation need not even be the one of the input (i.e. of Y_in), or for that manner of whatever output the dynamic range conversion circuitry or its encompassing decoder may deliver (e.g. a format luma Y_sigfm for a particular communication format or communication system, "communicating" including storage to a memory, e.g. inside a PC, a hard disk, an optical storage medium, etc.).

We have optionally (dotted) shown a luma conversion circuit 301, which turns the input lumas Y_in into perceptually uniformized lumas Y_pc.

Applicant standardized in ETSI 103433 a useful equation to convert luminances in any range to such a perceptual luma representation:

$$Y\_pc = \log\_10\{1 + [RHO(WPL\_inrep) - 1] * power(Ln\_in; 1/(2.4)) \} / \log\_10\{ RHO(WPL\_inrep)\} \quad \textbf{[Eq. 1]}$$

In which the function RHO is defined as:

$$RHO(WPL\_inrep) = 1 + 32 * power\{( WPL\_inrep/10000); 1/(2.4)\} \textbf{[Eq. 2]}$$

We will assume for the elucidation this equation is used, although other equations are possible converting to a somewhat different perceptually more uniform luma domain. It is shown dotted, as this is an optimal step/circuit, since one can also decide to do the color transformation in another color representation domain (or often the pre-mapping may be incorporated in the e.g. luma mapping LUT of luma mapping circuit 302, which will then get the original input as input). In general there can be three different luma domains/definitions, input luma, internal or calculation luma, and output luma, but those may be all in the same domain, e.g. PQ luma.

The value WPL_inrep is the maximum luminance of the range that needs to be converted to psychovisually uniformized lumas, so for the 100 nit SDR image this value would be 100, and for the to be reconstructed output image (or the originally coded image at the creation side) the value would be 1000.

Ln_in are the luminances along that whichever range which need to be converted, after normalization by dividing by its respective maximum luminance, i.e. within range [0,1].

Once we have an input and an output range normalized to 1.0, we can apply a luminance mapping function actually in the luma domain, as shown inside the luma mapping circuit 302, which does the actual luma mapping for each incoming pixel.

(note that the exact shapes of the function (once being determined as a desired well working function for the luminance contents of objects in any particular HDR scene image) depends on the one hand which respective maximum luminance ML has been used for the normalization, and on the other hand which EOTF or OETF was elected for representing luminances as lumas, e.g. perceptually uniform lumas, but the essence of the story, and the technical components, in general stays the same; at least in the systems of applicant which can handle various technical formats or desiderata; the skilled person should have no trouble changing the locus of points on a luminance mapping curve in one representation, say normalized linear luminances, to corresponding point on a re-shaped curve if one or both of the coordinate axis change to a fixed re-definition, e.g. Y_p=OETF(L_lin)).

In fact, this mapping function had been specifically chosen by the encoder of the image (at least for yielding good quality reconstructability, and maybe also a reduced amount of needed bits when MPEG compressing, but sometimes also fulfilling further criteria like e.g. the SDR proxy image being of correct luminance distribution for the particular scene -a dark cave, or a daytime explosion- on a legacy SDR display, etc.). So this function F_dec (or its inverse) will be extracted from metadata of the input image signal or representation, and supplied to the dynamic range conversion circuit for doing the actual per pixel luma mapping. In this example the function F_dec directly specifies the needed mapping in the perceptual luma domain, but other variants are of course possible, as the various conversions can also be applied on the functions. Furthermore, although for simplicity of explanation, and to guarantee the teaching is understood, we teach here a pure decoder dynamic range conversion, but other dynamic range conversions may use other functions, e.g. a function derived from F_dec, etc. The details of all of that are not needed for understanding the present innovative contribution to the technology.

In general one will not only change the luminances, but there will be a corresponding change in the chromas Cb and Cr. That can also be done in various manners, from strictly inversely decoding, to implementing additional features like a saturation boost, since Cb and Cr code the saturation of the pixels. Thereto another function is typically communicated in metadata (recoloring specification function FCOL, which may in a number of advantageous embodiments be a color LUT (C-LUT)), which determines the chromatic recoloring behavior, i.e. the mapping of the blue chroma Cb and the red chroma Cr (note that Cb and Cr will typically be changed by the same multiplicative amount, since the ratio of Cr/Cb determines the hue, and generally one does not want to have hue changes when decoding, i.e. the lower and higher dynamic range image will in general have object pixels of different brightness, and oftentimes at least some of the pixels will have different saturation, but ideally the hue of the pixels in both image versions will be the same). The Cb and Cr may be in different domains depending on the input (e.g. Rec. 709, PQ), but will be in the same domain as the luma. This recoloring specification function FCOL will typically specify a multiplier which has a value dependent on a brightness code Y (which will then for each pixel be filled in by its brightness code, e.g. its input luma Y_in or the perceptually uniformized Y_pc, or other luma codes in other variants). This is because on the one hand chromas are defined in a brightness-dependent manner, but on the other hand they also code for the saturation of a pixel color, so the creator of the image and the recoloring specification function FCOL may want to play on both aspects, but, specifically either keep the saturation of image pixels unchanged, or alternatively not unchanged. A multiplier establishment circuit 305 will yield the correct multiplier m for the brightness situation of the pixel being processed, i.e. the multiplier m is actually a function of the pixel luma: m(Y), e.g. m(Y_in). A multiplier 306 will multiply both Cb_in and Cr_in by this same multiplier, to obtain the corresponding output chromas Cb_out= m*Cb_in and Cr_out=m*Cr_in. So the multiplier realizes the correct chroma processing, therefore the whole color processing of any dynamic range conversion being correctly configurable in the dynamic range conversion circuit.

Furthermore, there may typically be a formatting circuit 310, so that the output color triplet (Y_out, Cb_out, Cr_out) can be converted to whatever needed output format (e.g. an RGB format (e.g. an RGB format that a display may require), or a communication YCbCr format, Y_sigfm, Cb_ sigfm, Cr_sigfm). E.g. if the circuit outputs to a version of a communication channel 379 which is an HDMI cable, such cables may use PQ-based YCbCr pixel color coding, ergo, the lumas will again be converted from the perceptual domain to the PQ domain by the formatting circuit. Note that although we have shown a circuit that processes to Cb_out and Cr_out, and then processes further on the basis of those color components, that is in no means a limitation (of this mere elucidation). One can also make corresponding circuits which convert after the multiplication of the input chromas to the RGB domain, and then do further processing (e.g. luminance scaling; and output formatting; and possibly the display adaptation, which however often being a separate circuit may elect its own internal representation for calculation) on those RGB colors (linear or non-linear RGB).

**Fig. 4** shows one of the possibilities for realizing a pragmatic circuit for processing the pixel colors (400) for a luminance mapping of a dynamic range change, now applied in an encoder (/encoding application). This exemplary elucidation circuit converts internally to RGB, and does the correct brightness scaling on the RGB components (with a same, common scaling multiplier), rather than in the YCbCr domain. This circuit can be interchanged with the example of Fig. 3, i.e. both encoder and decoder can opt for either one (or more advanced circuits, which e.g. do special differential processing of the high brightness colors, or some other regions of the image, etc., as these examples are merely given to teach the basics as far a required or useful for understanding the below innovation concepts).

The luminance mapping now goes in the opposite direction, i.e. a down-mapping is shown in Fig. 4A. Although variants may perform e.g. operations in one go (e.g. by means of a luma mapping LUT), we elucidate two steps: first HDR pixel luminances are converted to SDR luminances. A color grader 450 may use his insights to determine an optimal luma mapping function F_ENCS. How precisely this will happen, and according to which criteria (which is a detail beyond the scope of this patent application, for which it is sufficient that there is a function), will depend on whether we have an offline grader for creating e.g. a Hollywood studio movie for a blu-ray disk, versus some shader in a production booth optimizing a real-time program. But criteria can be e.g. to keep sufficient intra-object contrast for the two regions (histogram lobes) of differential brightness, i.e. indoors and outdoors, whilst also trying to keep some ratio of their average luminance and/or some scarce or unused values in between the two lobes. More complicated HDR scenes may involve all kinds of further considerations, but these will be reflected in the elected shape of the function F_ENCS (i.e. the specifically elected output value for any possible input value). The color grader may use input sensors (454) such as a keyboard, trackball and the like (which is known in the field), and can watch his results on one or more displays. E.g. a first HDR reference monitor 452 may show the up to 1000 nit pixel colors of the master image (Mstr_HDR), and a second HDR reference monitor 453 may be set in SDR mode, meaning it will not display pixels brighter than 100 nit (but e.g. clip to 100 nit), and then if so desired the grader can watch the correspondence of the SDR, and what that SDR can still convey versus the original Mstr_HDR side by side (in other productions the grader may feel e.g. too influenced by the HDR image, and if his main audience still desires to receive the SDR proxy which should be of best quality, then the grader may be looking only at the SDR video). Note that much of the determination of the luma mapping function F_ENCS may in some systems (particularly real-time productions) be happening under control of an automaton, but then the grader may still use a few buttons to impose a few basic tweaks of his production, e.g. make it somewhat brighter than what the automaton comes with.

Once having squeezed the HDR 1000 nit ML luminances (and in fact colors) into the SDR 100 nit ML luminances for the proxy image, the second step is converting them to output lumas Y_out_SDR using an OETF, here the SDR OETF OETF_S which may typically be the standard Rec. 709 OETF, so that those lumas can be coded into an image in a straightforward known manner (e.g. the Y, Cb and Cr arrays will get compressed using any MPEG standard, then packetized, and then communicated over some communication protocol, or stored using some existing and decodable data or file format). We have shown a typical legacy compliant 8 bit output format, but 10 bit SDR may nowadays also be communicated.

**Fig. 4B** shows the per pixel processing (i.e. calculations similar to what was taught with Fig. 3, but for per-lower-DR-proxy systems typically in the inverse mapping direction; note that there could also be encodings straight to PQ as alternatives, and then e.g. only OETF-conversion may be required for the pixel colors) for this exemplary calculation circuit embodiment. We can assume the input color coding (Y_in, Cb_in, Cr_in) is in PQ format. Luma mapping circuit 302 and multiplier establishment circuit 305 will work largely similar as explained for the decoding in Fig. 3, but now the appropriate functions will be used for down-mapping, e.g. the luma mapping circuit will use a concave function which typically (as essential primary behavior upon which one can vary) relatively boosts the darker input lumas and compresses i.e. dims the brighter lumas, to squeeze everything in the smaller output dynamic range (typically without any or significant clipping, since one wants to revert the mapping in a decoder). Multiplication circuit 306 will again do the chroma correction by multiplying both input chroma components Cb_in and Cr_in by the applicable multiplier m for the pixel luma.

The luma mapping circuit 302 will yield an output typically in a luma domain, i.e. an output luma (Y'_out), and it may be advantageous to use the same domain as at its input (i.e. e.g. both PQ lumas, both perceptually uniformized lumas, etc.). Conversion to final output lumas in the Rec. 709 format or domain can then be handled by the encoder-formatter 410 doing the last processing steps. It will typically take care of converting the pixel colorimetric coding to the desired output format (here e.g. SDR chromas Cb_out_SDR and Cr_out_SDR and output luma Y_out in the Rec. 709 format, but other encoders may yield e.g. non-linear RGB' output, etc.). Typically encoder-formatter 410 may also do other expectable processing from video coding tech to yield the output as desired, e.g. it may sub-sample the chroma arrays, apply DCT transformation and entropy coding, and even map to a signaling frequency constellation and do encryption, etc. (which is also beyond the scope of this patent application)

Chroma a.k.a. chrominance components (so also input blue chroma Cb_in, and input red chroma Cr_in) are defined based on the luma:

$$Cb = k*(B'-Y)$$

$$Cr = l*(R'-Y) \qquad \text{[Eq. 3]}$$

wherein k and 1 are constants depending on the color coding definition (standard).

This means one can also define them in relation to the non-linear RGB' coefficients by means of a fixed matrix:

$$[Y; Cb; Cr] = [n11 \ n12 \ n13; n11 \ n22 \ n23 ; n31 \ n32 \ n33][R'; G'; B'] \quad \text{[Eq. 4]}$$

E.g., in SDR, the OETF for calculating the non-linear values is approximately a square root, ergo the non-linear R' value is the square root of the linear R-component contribution to the additive color mix, etc.

$$\text{Luma is defined as } Y = a*R'+b*G'+c*B' \qquad \text{[Eq. 5]}$$

wherein the constants a,b, and c depend on the elected additive primaries of the color definition (e.g. EBU CRT phosphor primaries used from the legacy times).

After multiplying in the first multiplication circuit 306, multiplied chroma Cb_m and Cr_m are typically clipped between lower clipping constant CLCL and upper clipping constant CLCU. These may be given values equal to -0.5 and 0.5 for a normalized (brightness-independent) YCbCr coding in which the luma entering the matrix calculation circuit 404 is always equal to 1.0, irrespective of what value the input luma Y_in had (this normalization is effected by giving the multiplier establishment circuit 305 the appropriate color LUT (C-LUT), which is typically implemented by making the first multiplication a normalization of the type:

$$Cb\_m = m*Cb\_in= m\_sat(Y\_in)*Cb\_in/Y\_in;$$

$$Cr\_m = m*Cb\_in= m\_sat(Y\_in)*Cb\_in/Y\_in \quad \textbf{[Eqs. 6]}$$

wherein m_sat(Y_in) is a factor which can be set to make e.g. the darkest colors a little more saturated than at the input, or the brighter colors a little less saturated, etc. From metadata loadable color function or LUT FCOL will specify this multiplicative recoloring behavior for each possible input pixel luma, i.e. m(Y).

So clipper 401 yields clipped chroma components Cb_cL and Cr_cL:

$$Cb\_cL = CLIP(CLCL; Cb\_m; CLCU);$$

$$Cr\_cL = CLIP(CLCL; Cr\_m; CLCU) \quad \textbf{[Eqs. 7]}$$

Note that there may be other definitions involved in the actual processing internals, but this elucidation just teaches the bigger picture of the color mapping and coding approach.

Matrix calculation circuit 404 is used to convert the normalized YCbCr color coding into a normalized RGB' color coding. It will use the inverse matrix of the n-matrix of above Eq. 4.

Finally the brightnesses of the pixels are correctly scaled to the output domain, i.e. corresponding to the maximum luminance ML of the output image, which in this elucidation example is an SDR image (i.e. backwards compatible because displayable on legacy LDR displays).

This is effected by using a second multiplier circuit 402 for scaling by whatever output luma Y'_out the luma processing track yielded for the pixel, so we obtain non-linear scaled RGB' components (R'_a, G'_a and B'_a) on the basis of the normalized RGB'components R'_n, G'_n and B'_n:

$$R'\_a= L'\_out* R'\_n;$$

$$G'\_a= L'\_out* G'\_n;$$

$$B'\_a= L'\_out* B'\_n \quad \textbf{[Eqs. 8]}$$

Although already quite complex, especially when the most professional HDR system wants to enable all options, and (perhaps inconveniently) as explained existing in many different variants (from a simple relative HLG to dynamically controllable per image pixel luminance optimizations), the above-elucidated technology seems to work well (suffice) if one wants to show a single-constituent visual asset, i.e. an image for at least one time instant, on (typically the entire drivable display area of) a display. I.e., it allows making HDR images, and specifying the various brightnesses, and colors (and therefore also details visibility, or visual impact for telling a story impressively) of HDR scene image objects in that image, according to a multitude of desiderata of various content producers (movies, teaching videos, etc.). And it allows to regrade by optimal luminance mapping those various pixel luminances coordinately to typically a lower dynamic range of some consumer display.

However, the visual imagery presentation world is becoming ever more complex, and there are an increasing number of applications for which the above is not enough, and for which a good, stable HDR approach or framework has not yet been described or developed. Furthermore, there may be some detail limitations in at least some of the systems of similar kinds as described above, which perhaps can be lived with in some scenarios like HDR movies or sports, but may become a more significant issue in e.g. HDR presentation for shopping on internet, or HDR virtual reality, etc.

SUMMARY OF THE INVENTION

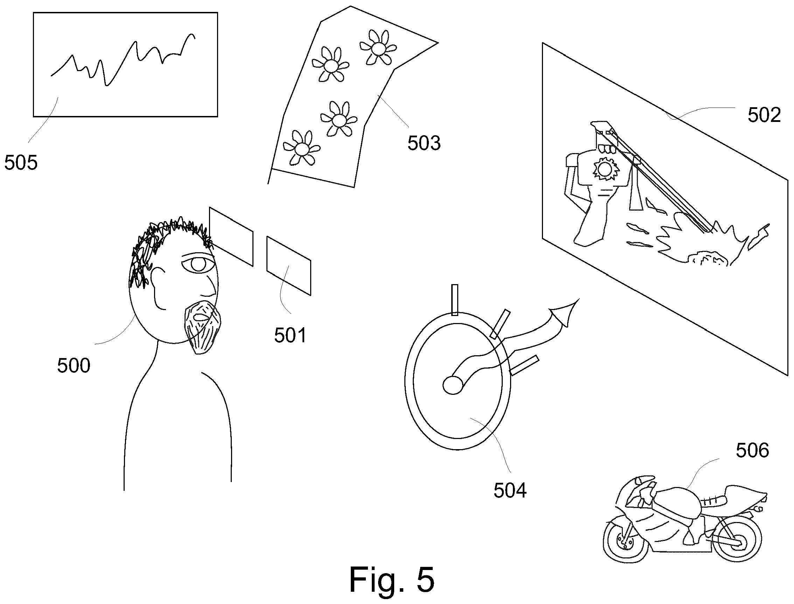

**Fig. 5** shows a (non-limiting: although an environment is shown wherein visual assets can be distributed in a composition spanning over a geometry of one or more physical environments, e.g. rooms, the same could still be a 2D presentation e.g. by projecting on a wall) possible visual presentation of various visual assets together in a (near) future, e.g. in an application of the metaverse or otherwise. Often, the visual assets will not be pre-coordinated as relates their dynamic range and spread (values) of object luminances along such various luminance dynamic ranges (e.g., the laser beams of the robot might just as well have a luminance of 1000 nit on a 2000 nit ML range coding, as they might be 800 nit on a 4000 nit ML different grading of the same visual asset). I.e., they may come from different creators of the content, some of which may not even have specific HDR rendering or luminance specification criteria. E.g., a user 500 may be viewing this (virtual) environment through VR glasses 501. He may be -as one application/use- watching a regular (as described above) HDR movie 502 (e.g. HDR10 or HDR10+ coded), and this may still be presented in a 2D canvas projection in the virtual environment (just as if a HDR television was hanging there, but now actually displayed through his VR glasses). At the same time, the environment may present 3D visual assets which are not bounded by a 2D projection/presentation plane. This may e.g. be a HDR texture projected on a 3D object 503 (e.g. defined by triangularization). As another use scenario he may be, at approximately the same time as watching the movie, e.g. intermittently or paused, shopping for a motorcycle, which floats or stands as a HDR 3D object 506 in the virtual space. There may also be user interface indicators 504, e.g. a dial indicating a setting or value of something. Furthermore, he may have parked in the virtual environment (maybe many days ago) some other visual asset, e.g. a graph 505 showing the evolving price of his stock. At the moment, when trying to present this, one would get rather unpredictable results as regards the final brightnesses and look, which may even be considered annoying (fake colors could occur, in particular for some mixes, flicker, things which are barely visible or annoyingly bright, etc.).

What complicates the situation is that these assets (even stills) may not be static. Not in the sense that a movie may contain darker and brighter scenes, because this movie gets presented as is (after potential display adaptation, it gets presented in its sole (normal) state, namely, the final pixel colors, e.g. as RGB, will have some specific values in this environment). I.e. it is determined (optimized) in one specific manner. But the brightnesses of the (dial) indicator 504 may by its asset creator be defined to be variable depending on what state this asset is in (e.g. if the value becomes critical, the creator of this user interface indicator may want to show it excessively bright -compared to its normal state's brightness-to make it attract visual attention), and there may be various states, and the state can suddenly change. Other states that programmers of user interface-related components, i.e. specific examples of visual assets, may want to define is e.g. a different brightness look for a user interface state of being selected versus deselected, etc.

Such application scenarios are elegantly handled by a new approach for coordinating luminances of various (typically separately created by different creators) visual assets in a compositor circuit (850) which is arranged to receive a first visual asset (810) and a second visual asset (800) and arranged to create a geometric composition (comp) of at least a first portion of pixels of the first visual asset (810) and at least a second portion of pixels a second visual asset (800), wherein at least the second visual asset comprises a coding (ImCOD1) which encodes a set of second pixel colors (Col1, Col2) for corresponding pixel positions ((x1,y1), (x2,y2)); and wherein at least the second visual asset comprises at least a first luminance or luma mapping function (FL_DEF_2K, 801) for transforming at least a luminance or luma of the second pixel colors when the second visual asset is to be displayed as being in a first state (STLAB1int), and a second luminance or luma mapping function (FL_SEL_2K, 802) for transforming at least the luminance or luma of the second pixel colors when the second visual asset is to be displayed as being in a second state (STLAB2int), wherein the first and second luminance or luma mapping function are specified to yield re-mapped reference first pixel colors respectively reference second pixel colors on a reference luminance range (RNG_RF);

wherein the first and second luminance or luma mapping function of the second visual asset are identifiable as associated with respectively a first state and a second state;
wherein the compositor comprises:

- a state establishing circuit (851) arranged to establish a current state (CurST) of the second visual asset;
- a function reading circuit (852) arranged to read a state-specific luminance or luma mapping function (FL_STSP) from the asset which satisfies the requirement that its associated state corresponds to the current state;
- a color transformation circuit (853) arranged to use the state-specific luminance or luma mapping function (FL_STSP) to transform the second pixel colors into mapped second pixel colors (ColM1, ColM2) having luminances within a combination luminance range (RNG_C), and arranged to map first colors of the first visual asset to mapped first pixel colors within the combination luminance range (RNG_C); and
- a geometric composition circuit (854) arranged to allocate the mapped first pixel colors to first asset pixel positions in the geometric composition (comp) and to allocate the mapped second pixel colors to second asset pixel positions in the geometric composition, and arranged to output the geometric composition.

The first and second luminance mapping function (or luma mapping function if the luminance mapping function is actually represented as a corresponding luma mapping function, to be applied on lumas which encode the luminances, i.e. which gives the same ultimate visual output) are advantageously specified, usually (though not necessarily) by a human creator of the assets (e.g. a grader for the movie, or a designer of the graphic, etc.), so that they give the visual effect as desired (i.e. they are sufficiently different in shape). So the functions will be specified so that there is a significant visual difference (of an aggregate of the asset pixels) when the asset is in a first respectively second state (e.g. one can change the shape of the function, which is a measure of the differences of various heights of the function points above the horizontal axis, or distances to a 45 degree diagonal, so that there are relatively many of the asset pixels that get mapped on the reference range to relatively dark colors, e.g. below 25% of a reference value on that reference range which can be taken as a typical value, e.g. around which the asset colors would be spread in the normal default state, in which the asset is shown as it should (unmodified) for such a reference range). This effect can be quantified by the creator specifying all of his assets on a common reference luminance range (RNG_RF). The maximum luminance (ML_REFST) of this reference range is selectable, so it might be that not all creators (must) use the same value. E.g., several creators may use a common value ML_REFST1=2000 nit, while someone else may use ML_REFST2= 3500 nit. Still, already the fact that each creator has such a reference range, allows him to more consistently define luminance changing effects, e.g. when a user changes the state of an asset by interacting with it. The assets (or in fact their luminance mapping functions) specified on different reference luminance ranges can still be mixed coordinated to each other, because stable/pre-defined function-change-algorithms can be applied, which can be so designed so that they largely maintain the order of the asset pixel luminances, and can even be so specified that they e.g. keep a certain original asset luminance value (which are guaranteeing to give the asset a certain appearance) below a certain value on a common reference range, or even the combination range, e.g. below some black level which can be characterized as a good dark black, or a reasonably dimmed color (dark grey) on e.g. a 3000 nit maximum luminance range (see examples below). The creator will typically specify the (at least) two different state-specific luminance functions to have such a different shape that they yield a conspicuous differential luminance appearance when mapping the second pixel colors of the second visual asset to a reference luminance range (RNG_RF) with the first respectively the second luminance or luma mapping function. E.g. this appearance may be the aggregate (e.g. average) luminance of the asset the viewer sees. So e.g. not all colors need to be darkened by a certain amount, as one can e.g. keep a small lamp still sufficiently bright to create an HDR look in the final composition even though the asset is in a dimmed state, as long as most of the pixels are clearly dimmed compared to the default state (e.g. for an asset unavailable state). Or that most or all of the pixels are sufficiently brightened to clearly see the different state, for some applications not only by comparison or spotting the variation in time, but potentially even when one comes back after taking a coffee, or opening the same browser application on another day. If many asset pixels that should normally have a relatively dim (SDR) luminance now show atypically bright (in an HDR luminance sub-range), that will indicate such a state to the viewer. So, although the invention is not limited to such specific functions, as we show below the creator can use rather strong state-dependent luminance mapping functions, e.g. strongly brightening all original asset luminances, e.g. even with a considerably large offset for the darkest blacks, for clearly indicating the "selected" state, or dimming down by a considerable factor for indicating the "unavailable" state, etc. Note that these state-specific functions typically need not be reversible, so some amount of clipping (even unreasonable clipping) may also be used to indicate some state, although some implementers may not desire such a quality deterioration of the HDR look, for which more modest functions can be bundled and communicated with the asset. Note that, unlike typical functions for guiding display adaptation (FLRG_Xto100), which typically map to SDR, and may (though not necessarily) also be present in the total representation of the visual asset, i.e. the visual asset representation signal, as may be stored in e.g. a memory, the state-dependent functions typically grade from HDR to another dynamic range which is also a high dynamic range (i.e. the e.g. 2000 nit reference range). Or more precisely, the luminance mapping functions typically define a "**to**-HDR" mapping, since one could also map e.g. relative sRGB graphics colors to the 2000 nit reference range.

A state of an asset is typically corresponding to a situation in a program, which can be represented by a number (or equivalent enumeratable code) and which is associated with the asset. E.g., this may typically occur in visual feedback user interfaces, wherein the state of the asset (and its changed visual look compared to another state) represents the situation. E.g., some such states may reflect actions of the user, such as a selection of a number of assets, to be highlighted upon selection.

The concept program, and the number of states, depends on the application. Some coding frameworks may cater to a limited application, and e.g. only supply a limited number of different states. Other applications cater to a larger ecosystem of usage applications, such as various apps communicating with internet resources that may share the screen. In a more limited application framework there may only be a few fixed states, e.g. in a video browser the states may be "still to watch, unhighlighted", "particularly recommended to watch"and "already watched", and then there may be only two overall luminance changing functions compared to the default state in which the asset just gets shown as is, i.e. with a typical standard range adaptation algorithm which doesn't significantly deviate the brightness of any set of pixels of the asset. For universal applications, standardization organisations may build a set of typical states that may typically be of use for any or many of the apps, e.g. an alert highlighting state.

Compared to this may also be the indication mechanism for indication to which state of the set any specific mapping function belongs. A useful and upgradable mechanism may be to associate the function with a label which uniquely indicates the state (e.g. "inactive", which may be used by an application as the typical state for i.e. corresponding to its internal state "video already watched"). But the concept is not limited to that. The unique meaning of the state can also be indicated by e.g. a pre-agreed ordered listing of the functions. E.g., the first function (if any is needed) may be a function to show the default state. The second function may be by standardized definition always the "specific highlighting state" function which applies a brightening of at least a sufficiently large sub-set of the asset pixels, e.g. those pixels that have a below-average original luminance in the asset (and mapping to re-mapped (slightly) above-average luminances on the reference range), and the third function in the set is always understood to be the darkened "unavailable" state function, which as set can be used for various similar purposed of an internal state of any app that will use this function. The default function can be coded by a different mechanism, e.g. standalone without a label (as it is implicitly understood to be the default function). The second pixel colors are the original pixel colors which define the second visual asset (in its standard look). The internal program logic of the compositor circuit will be arranged to look for the most suitable of the communicated state-dependent functions (typically since the developer will know what options are available), and if it cannot correctly determine this it may just choose on of the functions, which may still have benefit as long as the circuit consistently chooses a state for its internal state. Ideally the user always sees e.g. a darkening for all apps when presenting "unavailable" or "already watched" assets, but should the display extra bright at least the user can quickly learn that this app uses this different (atypical) behavior. In case there are less internal states in the app that need visual indication than mapping function options in the communicated asset, the circuit may select the best suitable ones, giving the more expectable, or conspicuous look out of the set, and in case there are less functions than needed the circuit can group some of the functions. The compositor circuit may in a scenario that e.g. just one darkening function is communicated in the asset on its own account sub-divide this into two processing functions based on the asset function, e.g. the second darkening function darkening the darkest pixel colors somewhat more than the darkening function communicated in the asset indicates, so that the user with somewhat more attention has the ability to spot some further difference (e.g. between "already watched" and "already watched twice" sub-states of the group).

Advantageously the compositor circuit (850) uses as the first and second state of the second visual asset internal states of a program according to some enumerable variable, for which visual feedback is to be given by means of a luminance change of the second visual asset in a user interface. In the communicated asset signal, also some enumerable states will be coded. The coded states can be matched as best match to the various internal states by the compositor circuit (e.g. on standardized or agreed rules coded in the circuit running e.g. an app).

Advantageously the compositor circuit (850) may identify a current state of the second visual asset which changes to another state due to interaction of the user with a rendering of the second visual asset in a location of the composition. It may then select another co-encoded function in the communicated and inputted visual asset that better matches the new internal state.

Advantageously the compositor circuit (850) works with a current state of the second visual asset changes due an information update regarding the second visual asset state received over a data input (881) which connects via a network to a server (880). This can enable also coordination of visual assets by e.g. a server on the internet via the compositor circuit.

Advantageously the compositor circuit (850) is arranged to handle visual assets of at least one type from a set comprising: a still image, a video of images, a graphic, a three-dimensional object, a texture for geometric mapping onto a three-dimensional object, a point cloud of HDR pixel colors and an algorithm for calculating a set of colors at pixels positions in a two-dimensional or three-dimensional space.

Advantageously the compositor circuit (850) is arranged to create the geometric composition (comp) being at least one of a set comprising: a two-dimensional rectangular or non-rectangular region of pixels, a three-dimensional set of pixels, and a world comprising of a set of locations comprising two or three-dimensional pixel sets. It is to be clear to the skilled reader that all such options of the first variants can be used in any of the options of the second listed variants.

Advantageously the compositor circuit (850) is arranged to ingest and manage, for at least the second luminance or luma mapping function, an associated second state label (STLAB2). This label may be coded in the asset encoding e.g. right before or adjacent to the codification of the function (which may be points of a LUT, or parameters defining the equation of the function). The first asset may be mapped into the combination range by other means than an asset-encoding function in some embodiments, and in some scenarios the combination range may be equal to the reference range or at least have a same maximum luminance. The first function may also have an associated first state label (STLAB1) in some variants. This provides an easy manner for the compositor circuit to judge which function would best correspond to the present internal state any asset being processed for display currently has.

Advantageously the compositor circuit (850) is arranged to read from the second visual asset a species of the coding (ImCOD1) which comprises three arrays of three additive color components for different pixel positions. The additive color components may be coded (as they were by an encoder of the visual asset) as e.g. YCbCr color components defined according to an HDR or SDR Electro-optical transfer function, or non-linear R'G'B' components defined according to an absolute or relative HDR or SDR Electro-optical transfer function, or float numbers defining linear red, green and blue color components, etc.

Advantageously the compositor circuit (850) may have its color transformation circuit (853) arranged to directly apply the state-specific luminance or luma mapping function (FL_STSP) to luminances respectively lumas of the second pixel colors to obtain mapped luminances respectively lumas of the mapped second pixel colors (ColM1, ColM2). This can be applied if the output range of those functions is already the range suitable for doing the geometric composition.

Alternatively the compositor circuit (850) may have its color transformation circuit (853) apply an adapted reference luminance or luma mapping function (FL_REFM) which is based on the state-specific luminance or luma mapping function (FL_STSP) to the luminances respectively lumas of the second pixel colors. As we teach below, a standard range adaptation algorithm can re-shape the function in such a manner that for a combination range which ends at a higher or lower maximum luminance range the adapted mapping function shape still largely follows the shape of the mapping function communicated in the asset, and therefore the visual impact is still largely the same, at least in such a manner that the visual effect in the composited final image for display can be correctly perceived (the amount of darkening indicating e.g. the inactive state of that asset in the composition).

Useful according to the innovative principles is also a visual asset encoding apparatus (1000) for creating and encoding a visual asset which comprises a coding (ImCOD1) which encodes a set of pixel colors (Col1, Col2) for corresponding pixel positions ((x1,y1), (x2,y2)) of the visual asset, and at least a first luminance or luma mapping function (FL_DEF_2K) for transforming at least a luminance or luma of the pixel colors when the visual asset is to be displayed as being in a first state, and a second luminance or luma mapping function (FL_SEL_2K) for transforming at least the luminance or luma of the pixel colors when the visual asset is to be displayed as being in a second state, wherein the visual asset encoding apparatus comprises:

- a asset specification circuit (1001) to define the coding (ImCOD1);
- a luminance mapping function determination circuit (1002) arranged to determine the first and second luminance or luma mapping functions; and
- an asset coding unit (1003) arranged to code the coding (ImCOD1) and the first and second luminance or luma mapping functions in an asset representation signal (SIG_ASS), wherein the states are selected from a set representing states of a program which uses those states to represent a change in a parameter which needs to be visually communicated to a user in a user interface.

Advantageously an embodiment of the visual asset encoding apparatus (1000) may indicate the state of at least the second luminance or luma mapping function (FL_SEL_2K) by associating a state label (STLAB2). This may be taken e.g. from an agreed set, of one or more technical designers of an asset communication system.

Advantageously embodiments of the visual asset encoding apparatus (1000) may code the visual asset as one of a set comprising: a still image, a video of images, a graphic, a three-dimensional object, a texture for geometric mapping onto a three-dimensional object, a set of points in a three-dimensional environment which points have colors, and an algorithm for calculating a set of colors at pixels positions in a two-dimensional or three-dimensional space.

Advantageously embodiments of the visual asset encoding apparatus (1000) may define the first luminance or luma mapping function (FL_DEF_2K) and the second luminance or luma mapping function (FL_SEL_2K) specified to map luminances of the pixel colors (Col1, Col2) to positions of a reference luminance range (RNG_RF) which has a selected reference maximum luminance (ML_REFST). This range can be pre-agreed and fixed, or variable.

The innovation can be embodied as a technical visual asset representation signal (SIG_ASS) comprising:

- a coding (ImCOD1) which encodes a set of pixel colors (Col1, Col2) for corresponding pixel positions ((x1,y1), (x2,y2)) of the visual asset; and
- a first luminance or luma mapping function (FL_DEF_2K) linked to a first state label (STLAB1) or other state identifier which indicates that this function is for transforming at least a luminance or luma of the pixel colors when the visual asset is to be displayed as being in a first state corresponding to this first state label, and
- a second luminance or luma mapping function (FL_SEL_2K) linked to a second state label (STLAB2) or other state identifier which indicates that this function is for transforming at least a luminance or luma of the pixel colors when the visual asset is to be displayed as being in a second state corresponding to this second state label, wherein the state labels are selected from a set representing states of a program which uses those states to represent a change in a parameter which needs to be visually communicated to a user in a user interface.

The visual asset representation signal (SIG_ASS) may use as the second luminance function a function which is defined to implement a mapping which maps an average of a set of the asset pixel luminances to a value below a first representative luminance on a reference luminance range (RNG_RF) or a value below a second representative luminance on the reference luminance range (RNG_RF). E.g., the first representative luminance may be a luminance which will be perceived as a dark grey in the reference range mapped assets, and the function may be so defined that it maps a percentage of the asset luminances, e.g. more than 50% of the original luminances so dark as to map below that dark grey reference luminance.

Useful is also a method of composing two visual assets in a geometrical composition (comp) comprising:

- receiving (910) a first visual asset (810) and receiving (907) a further visual asset (800);
- establishing (902) a combination luminance range (RNG_C) which has as highest luminance a combination range luminance maximum (LM_C);
- mapping (903) the first colors of the first visual asset to mapped first colors to have their luminances fall within the combination luminance range (RNG_C);

- establishing (906) a current state (Cur_ST) for the further visual asset (800);
- reading a state-specific luminance mapping function (FL_STSP) from the further visual asset which has a state which corresponds to the current state (Cur_ST), wherein the further visual asset comprises at least two state-specific luminance mapping functions for two different states of the further visual asset corresponding to an internal parameter of a program;
- luminance mapping (908) a set of second pixel colors (Col1, Col2) of the further visual asset by using the state-specific luminance mapping function (FL_STSP) to map at least luminances of the second pixel colors, to obtain mapped second pixel colors (ColM1, ColM2);
- geometrically mapping (904) at least a first portion of the mapped first pixel colors to positions in the geometric composition (comp) for pixels of the first visual asset;
- geometrically mapping (909) at least a second portion of the mapped second pixel colors to positions in the geometric composition (comp) for pixels of the second visual asset; and
- outputting (910) the geometric composition (comp).

BRIEF DESCRIPTION OF THE DRAWINGS

These and other aspects of the method and apparatus according to the invention will be apparent from and elucidated with reference to the implementations and embodiments described hereinafter, and with reference to the accompanying drawings, which serve merely as non-limiting specific illustrations exemplifying the more general concepts, and in which dashes are used to indicate that a component is optional, non-dashed components not necessarily being essential. Dashes can also be used for indicating that elements, which are explained to be essential, but hidden in the interior of an object, or for intangible things such as e.g. selections of objects/regions.

In the drawings:

Fig. 1 schematically shows examples of various luminance dynamic range changes (Fig. 1C) of image objects in a cave scene (Fig. 1A), which get objects get different (average) luminances when represented in different maximum luminance versions of the same image; such luminance mappings can be implemented by using luminance mapping functions (Fig. 1D) to be applied to any pixel's luminance, depending only on the input luminance irrespective of the position of the pixel in the image, and such functions can also be calculated in a luma domain coding the luminances; also shown in Fig. 1B is how one can normalize the input color gamut and the output gamut and then show the luminance mappings as vertical shifts of the input colors in the gamut;

Fig. 2 schematically shows various source to sink (user) video or image communication systems which may implement the present innovative embodiments;

Fig. 3 shows an elucidation example of how an HDR decoding apparatus can ingest an encoded HDR image (or visual asset) coding, according to any of many different coding variants, and ultimately output a HDR image of different (selectable) characteristics as desired, e.g. for direct display on a connected display;

Fig. 4 schematically shows a system and apparatus for creating, and specifically encoding a HDR image coding, e.g. for communication to receiving apparatuses over e.g. a broadcast or internet-based communication system;

Fig. 5 schematically shows an advanced future-proof example of coordinately (regarding the pixel luminance of the various assets) presenting various visual assets in a total composition e.g. in a virtual 3D environment, (or alternatively a 2D region e.g. covering display pixels);

Fig. 6 schematically shows an example application simultaneously presenting/displaying various visual assets which may come from different locations (e.g. server systems on the internet) and creators of the assets, which is elucidated by a still photo browser or video/movie picker;

Fig. 7 schematically shows how one could relatively easily implement relative brightness changes of the various visual assets in a SDR image creation and display paradigm (e.g. darkening overall the asset pixels to show deselection, and/or brightening the asset pixels to show selection, compared to their default display state and manner; or for other visual feedback applications to a user), but how trying to further build on this, and creating a related approach in HDR is not trivial;

Fig. 8 schematically shows a compositor (compositing circuit) having innovative capabilities to work with innovatively defined visual assets, to guarantee a coordinated composition so that users can reasonably see the visual changes, e.g. the selection of a particular asset in the total composition;

Fig. 9 schematically shows a flow chart of a method according to which one can implement at least some embodiments of the present invention;

Fig. 10 schematically shows a (creating/) encoding apparatus for creating the innovative visual asset representation signals (SIG_ASS) by which the present new framework can realize the present new asset composition;

Fig. 11 shows an elucidation example of how one can for HDR visual assets define in a sufficiently stable manner (sufficiently conspicuous to a viewer when using a system having visual feedback by means of luminance changes of one or more of the assets) a state-dependent luminance change of the asset which shows a similar brightening for various assets compared to their default displaying state;

Fig. 12 shows another state-dependent luminance mapping function creation for the various assets, in which the different state corresponds to a visual darkening which is similar for various assets, which potentially come from various creators, and which may dynamically be integrated in the total geometric composition on the fly, e.g. when interacting with one or more websites;

Fig. 13 schematically shows how the compositor can change the state-dependent visual asset luminance mapping functions from the reference-range definition for which they were created to a composition range that has a different maximum luminance than at least one of the reference ranges of at least one of the visual assets to be added to the geometric composition; and

Fig. 14 schematically shows how one can easily display adapt the generated geometric composition for it to be optimally shown on various end-user displays.

## DETAILED DESCRIPTION OF THE EMBODIMENTS

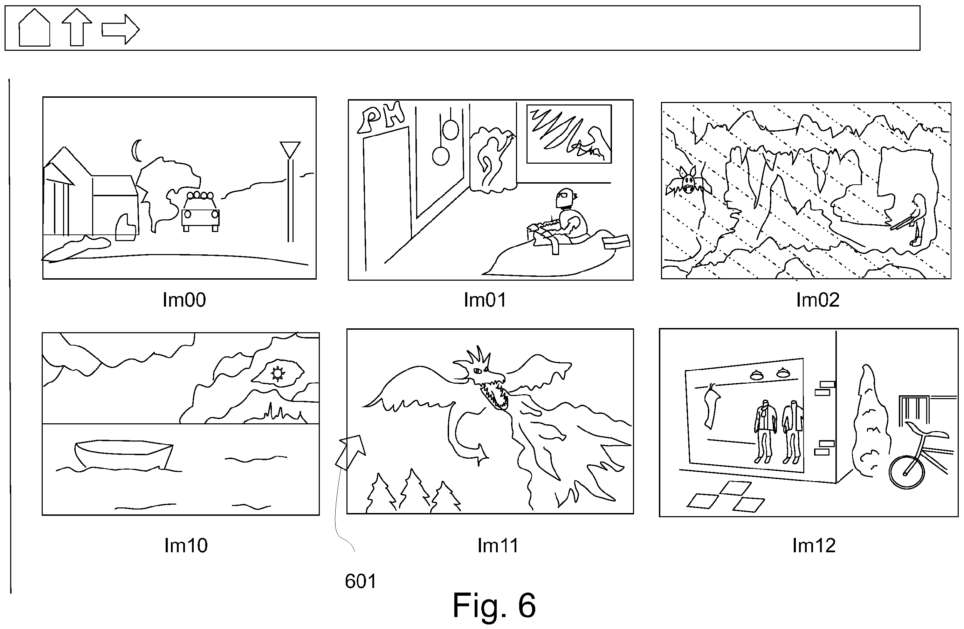

**Fig. 6** shows another typical application wherein assets can change their visual state under the influence of e.g. user interactions (user interface inputs). Another state of a computer-controlled visual asset could be one of a set of states toggled through by software acting on a measurement or change of an internal control value or setting value. Typically the states start from a basic state, and then one or more alternative states. Typically all assets would be presented together (by placing them adjacent to each other, or overlapping) in their normal state, unless one of the assets is to be presented (or changed to) a different internal (software coded) state corresponding to a different visual appearance, e.g. brighter (in at least one aspect, e.g. the darkest and middle brightness pixels becoming brighter) than when in its normal state.

Fig. 6 shows a viewer for selecting e.g. HDR photos from one or more collections, or e.g. short repeating snippets of a video representing the video for selection. The normal (unchanged) state for any video is unselected. I.e. when the internal state of the control software of this user interaction application for any visual asset being one of the presented image is "unselected" the image will be presented with its normal colors. If the photos are PQ 1000 nit ML photos, they may all be presented after display adaptation to e.g. the maximum of the display being ML_D= 600 nit. The normal colors will be in the 1000 nit ML luminance domain, which can be used as a common stable domain. If one of the photos was originally a 4000 nit ML photo, it will also be display adapted to the 600 nit ML common reference, for displaying on the used display or VR headset. Six images (or videos) are shown: Im00 is a dark night scene of a city; Im01 is a scene of a scifi movie with normal brightnesses but some ultra-bright light objects; Im02 is a scene in a dark cave; Im10 is a daytime image of the sea with a bright sunset; Im11 is a normal average luminance scene however with a bright flame of fire; Im12 is a nighttime street scene with a shop window that has relatively bright spotlights.

The user can use e.g. mouse arrow (pointer) 601 (or equivalent UI means, like e.g. physical finger pointing into space, eye gaze, etc.), to hover over one of the photos, and select it by clicking (or in general, manipulate the visual assets so that they go into another internal software state). The hovering action and corresponding software state of that visual asset may correspond to displaying it somewhat brighter, and when actually selected, the state "selected" may correspond to a larger brightness increase compared to the normal unselected state.

Other examples of states may e.g. be "default image", according to some criterion of the software (e.g. the most recent in the repository), and that may correspond to yet another visual change of the local image's pixel luminances in the common presentation. Other examples of varying states configurable under control of e.g. external software of a server side application, in case this is a presentation of movies available on that server, is setting different states according to calculated estimated relevance to the viewer (e.g. if he prefers fantasy movies the movie having as representative still image or video snippet the dragon may be shown the brightest). If the video becomes state= "unavailable" it may be visually presented as very dark, or, since as we will show below the present technology is not merely capable of changing the brightness, very low contrast between the image's darkest and brightest pixel. Another example of state control under the (usually local) user interface software control is where the user not merely selects the video (e.g. for watching right now), but state= "marked" it for watching later. Next time the user views the application (which may be upon opening up on a regular 2D displayed interface, but in 3D worlds the set of videos with the marked videos in their e.g. brightened state of the 20% brightest objects may stay hanging in the virtual location e.g. corresponding to sitting on the sofa in the actual living room, or behind the desk of your actual working office, or in a certain production location of a factory, etc.) this image will (still) be shown in its changed visual state corresponding to the "marked for later" internal state of that visual asset. Another example of a state of visual asset is that it may be connected or subsidiary to another visual asset. E.g., the second image or movie adjacent to the first one may contain director's comment to the first image representing the movie or the like. In general, although the principles of the technologies presented don't present limitations, it may be advantageous if applications or systems use only a few different states for at least some group of visual assets, e.g. 3 to 5 different states, otherwise it may be complex for the user to represent them as luminance re-gradings.

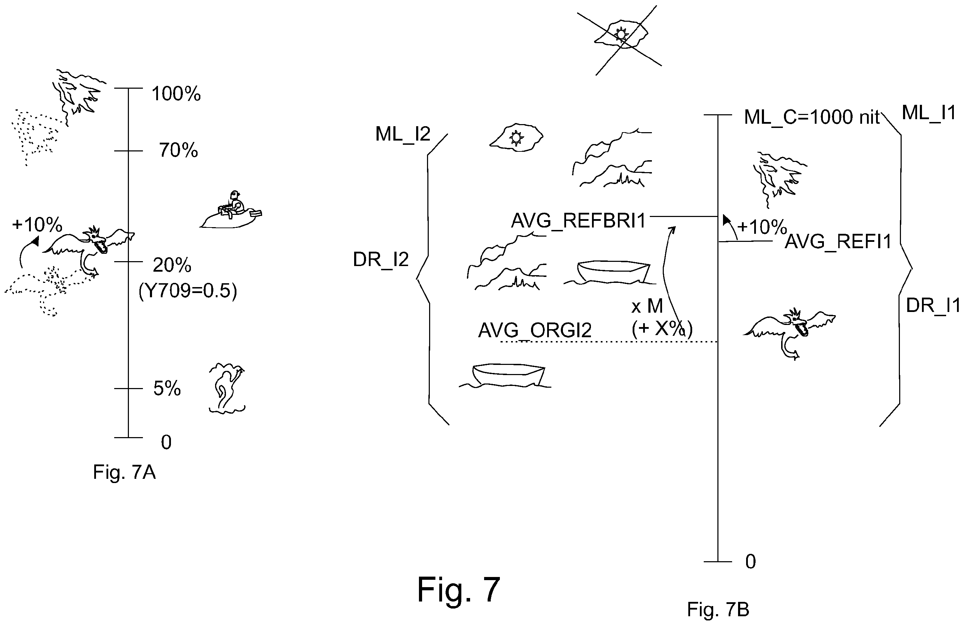

**Fig. 7** schematically illustrates why there was not much of a problem in the SDR video definition, and what one could try to do in an HDR system which may work somewhat similarly, but what problems that would give.

As Fig. 7A shows, SDR has a relatively simple situation, because there is only one dynamic range, namely the relative range between 0 and 100%. 20% linear brightness corresponds to a visual impact of middle gray, which is also approximately the Rec. 709 luma value (Y709 = 0.5 out of 1), so for modest dynamic ranges one can approximately say that the luma code for equidistant visual brightnesses. Because there is only one dynamic range, by definition all images will lie along that range, so also images to be composed together, as well as the output composed image. Also in a relative system it seems rather straightforward to implement relative brightness changes.

E.g., if the original values for the dragon were 18% luminance, one can add 10% of their brightness, bringing them to 18%+1.8%=20%. The same would then be done to the flames (whether one adds 10% to the original brightness of the flames, or a fixed value which is 10% of something, e.g. 10% of the middle value (20%) is a detail of realization). It may occur that some of the flames clip to (above, so to) maximum white (100%, or 255 as luma code), but that is a property that is acceptable in SDR, and would also usually not be seen as problematic in a visual feedback user interface (UI), such as selection being indicated by brightening.

As the HDR composition of Fig. 7B illustrates, in HDR it is in principle also possible to - even on an absolute axis of luminances- do relative luminance increases, however, things are much more complicated there.

For starters, there is no single universal HDR dynamic range, so assets may have different proper (individual) dynamic ranges (dynamic range of first image DR_11 versus dynamic range of second image DR_12).

But dynamic range as a ratio of a maximum luminance ML and a minimum luminance MB is a technically usable but only rough characterization of HDR images. For starters, already by itself, the simultaneous increase of all pixel luminances between and including ML and MB may have different visual impact for the various luminances, already for a stand-alone displaying of a sole image (which change of visual impact may be the technical desideratum for visual feedback in a UI). E.g., even when increasing them by 10%, some of the blacks may either be below the reflection level of surround light on the display screen, or at a level where the visual system classifies them at the level of the (not so interesting, not to be given much attention to their precise luminance differences) blacks anyway. However, raising the brightness of an object that is already bright, may have a more significant impact, in particular if it is geometrically composed among other image objects or assets, and in particular if some of those assets originated from another source, and their creator determined their brightnesses in isolation purely based on proper properties of that asset itself, not knowing if or what composition may happen in the future. So the first image maximum luminance ML_I1 and the second image maximum luminance ML_I2 may also be useful properties of the images when doing the composition.

So the composing apparatus (or method) may first want to determine a common range for the composition. This may be e.g. the range of the first image (or asset). In a simpler variant, it may be beneficial to use as the maximum of the composition range e.g. a pragmatically beneficial composition maximum luminance ML_C equaling 1000 nit.

But even then, when trying to keep things simpler than they may be in some systems or applications, a good HDR composition of two separate assets is not trivial. Because the maximum and the minimum is by itself not fully descriptive of the color content (and consequently its visual impact) of the image(s). E.g., one could take the ocean, boat and sunset image, for which say the brightest pixel is 4000 nit and the darkest one 20 nit, and change one pixel into 15000 nit, and one pixel into 1/10000 nit. Mathematically, the scene would then suddenly seem to have a very large dynamic range, which has to be taking into account when luminance down-mapping (e.g. to the 0.1-100 nit SDR range), but visually of course there will be no significant difference between the tweaked and original image.

So one would desire more properties of what exactly is inside the images, to do a better composition.

The average of the image luminances (or perhaps lumas, although mixing on the highly non-linear PQ lumas may not be preferred) may seem a reasonable attempt.

Because one can perceive the fixed SDR range as averaged around the middle grey (20%). What is below middle grey starts to (relatively) look as dark colors. So we could de-emphasize an image in an image or video picker application by moving its pixel colors largely into the bottom half of the fixed SDR range. Brightening can happen relatively, but also be brightening enough so that a majority of the image pixels fall in the upper half, above 20% (linear) brightness.

We might want to simulate a similar behavior in a HDR system, even when having assets of different dynamic range.

When the first image has some dominant meaning (e.g. it is the video that was playing first, in a large screen rendering; or it was the image picker view already composed from a few videos, which were, or after luminance mapping now are, of the same first image maximum luminance ML_11, to which the new second image of different luminance properties (in particular ML_I2) now has to be added) one can take its average, as reference average AVG_REFI1, for the total composition.

One could then luminance process further original images, which would have their proper original image average luminance (or luma) AVG_OR1G2, so that the average of the luminance up-or down-mapped further original image would be the same or approximately the same as the reference average AVG_REFI1. This can be achieved by multiplying all pixel luminances of the further image to be added to the composition by some multiplier M (so that the averages are equal), which is the same as some percentual increase (+ X%).

That would seem to form a usable basis also for doing the brightness (actually luminance in the HDR color definition) increases and decreases of visual UI feedback, such as asset selection, unavailable asset, previously watched asset, and all the other possible state examples elucidated above.

Because, once having some (now on an absolute dynamic range 0-1000 nit) common range and average ("midpoint", color of prevalence and the visual impact in particular brightness impact of that typical color) for the composition range, i.e. the reference average AVG_REFI1, one can also define brightness (luminance) levels relative to it, e.g. a brightened average AVG_BRI1, which is e.g. 10% brighter than the reference average (luminance typically).

This is still not the most professional, versatile technical approach for future-proof multi-asset systems, such as when browsing various visual assets originating from servers and incoming via the internet.

It has as problems that it is rather heuristic, doesn't capture all the properties of the distribution of object luminances in the various assets, is simple, and therefore one can quickly realize some visual feedback but only in a specific manner whereas one may want to realize other luminance impact changes than an average boosting or dimming, doesn't take into account what further processing such as display adaptation may in a professional manner still want to do with the various asset luminances, and importantly, is a rather fixed strategy in the mixer, on which the various asset creators have little say.

Indeed, we already see that when the image of the maker of the image of the sea image (Im10) is processed in such a manner in such a compositor embodiment, its look comes out rather poorly: the whole beautiful sunset (with nearby clouds which are quite brightly lit, but, purposefully and diligently graded, still of somewhat lower luminance than the pixels of the sun disk itself) now gets displayed as an ugly all 1000 nit bright white patch (see the cross symbolizing that all image structures above maximum luminance are just lost from the displayed image). It should be noted that if the compositor elected as composition range the range of an actual consumer display, which might be as dim as ML_D1= 80 nit or even less, or as bright as ML_D2=2000 nit, or even more, not only the above-gamut mapping severity would typically depend on that display, but also where all other colors, that would be within displayable range, would end up along that range, ergo, the visual impact of any brightness change may strongly depend not only on what is in the scene, but also the display capabilities.

Note that, although we started our elucidation with a system creating a fixed 1000 nit maximum composition range, this is by no means the only possible future approach. It could also be e.g. the compositor (or compositor circuit) starts to add a few images in the 1000 nit ML_C composition, but then gets a further image for which it judges a 2000 nit ML_C composition may be better (e.g. because its one (still) or more (i.e. video) images contains important image objects all the way up to 10,000 nit, e.g. a beautifully graded supernova explosion, and one really doesn't do sufficient justice representing this image by a maximum luminance of 1000 nit, at least already on the composition range, i.e. prior to possibly some needed display adaptation to fit into the range of some of the worst consumer displays). Then the compositor may switch to 2000 nit ML_C, and, whereas some embodiments may then start the composition all the way back from the first image or asset (but the professional system should still work nicely also for the different composition), it may also be advantageous if e.g. the compositor simply re-grades the image area containing already a composition, and then composes in the new assets for the 2000 nit ML_C composition. As explained above, to the naive that may sound much more straightforward than it actually is. A good quality embodiment of the compositor should for the re-grading of the already partially composted partial composition take into account that one or more object luminance sub-ranges may now be e.g. relatively dark compared to the amount of newly incoming brighter object pixels, and luminance map correspondingly. So the compositor may already know, and have decided, for a number of visual assets what the optimal composed luminance composition (i.e. the totality of the preferably reasonably coordinated object pixel luminances of the various assets already placed) is, but it may in several scenarios still be totally unknown what the additional asset will be to be placed e.g. in the last rectangular area of the total composition. E.g., a user may connect any website, and obtain any HDR video from there, or any HDR graphic.

It seems like one must try to endeavor to do better. The compositor, and preferably also the creators that supply assets to the compositor, should have enhanced capabilities.

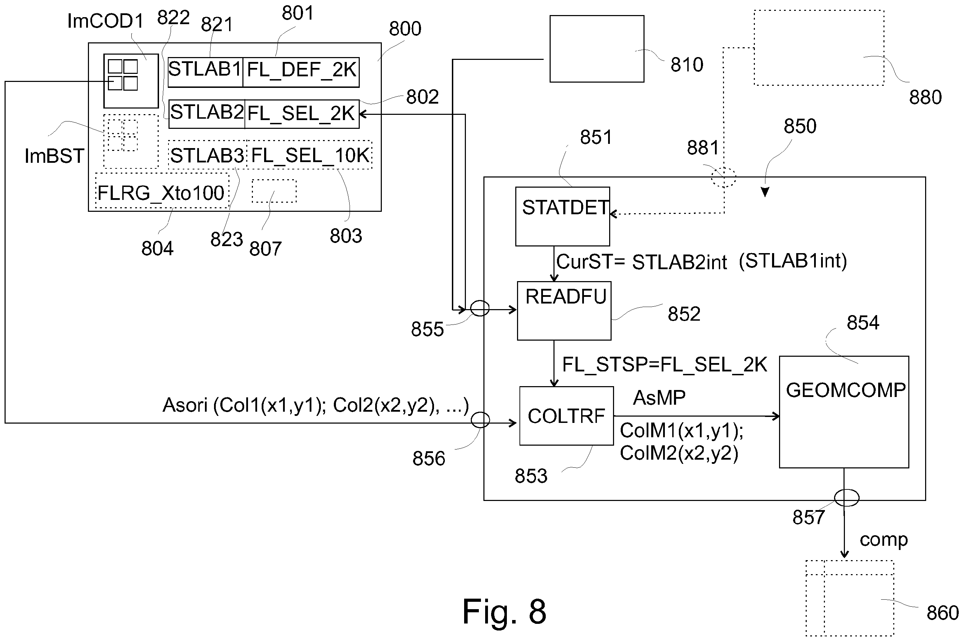

**Fig. 8** elucidates how a compositor circuit (850) can read the innovate signal definition (coding) of a second visual asset (800) to add it into the composition (comp). It will do so via asset input (856) which can read the original asset color set (Asori), which comprises a first color Col1(x1, y1) for a first pixel position (x1, y1) of the asset (not necessarily the final pixel position in the composition since there may be geometric transformation involved), and a second color Col2(x2, y2). The color definition may be anything. We exemplify by the visual asset coding (ImCOD1) being a classical image coding, of e.g. a rectangular pixel area (or any other shape, like an ellipse), and some popular codings for the triplet of additive color components may e.g. be PQ-defined YCbCr, sRGB (which is relative, but can be mapped to an absolute luminance-based gamut of colors), floating point linear RGB values that range above the value 1.0, etc. There may even be a secondary image (ImBST) to define the colors for just one visual asset of one display time instant (and more such images for a video which has several display time instants). This secondary image may comprise multiplication factors. If the first image (i.e. such a species of ImCOD1) is e.g. an MPEG-AVC compressed YCrCr_rec709 SDR image, that image may serve to define the proper colors of pixels (as if they were the paint on some object absorbing and reflecting the incoming light), and the pixels of ImBST (which can be a single channel grey scale image, where the per pixel values are to be multiplied by each respective one of the three color component values in ImCOD1) can then emulate a situation of that object in the image of the scene locally getting more or less illumination than the average illumination level.

So there would be at least a first state-specific luminance mapping function (801), e.g. for the default state, and a second state-specific luminance mapping function (802), belonging to a second state label STLAB2, which signifies that this function is to be used to re-grade the pixel colors (as defined by ImCOD1) to the reference range-related output colors, when e.g. the asset is "selected".

As we will show below, although this asset may be defined for a maximum of the reference range being 2000 nit (which value can also be indicated in the asset representation, in maximum luminance indicator 807, but in case that is not present the reader of the visual asset may assume it to be a universally agreed value, e.g. 2000 nit), the compositor circuit may still derive 3000 nit maximum state-specific luminance mapping functions based on the state-specific luminance mapping functions as read from the asset, by typically using a fixed, commonly agreed shape-preserving function-deformation algorithm (an example of which is elucidated below). However, the maker of the visual asset may not prefer that for very large reference ranges, so he may elect to include an alternative state-specific luminance mapping function 803 again describing the luminance mapping to be applied when the state of the asset is or becomes "selected", but now defined on, i.e. mapping to a 10000 nit ML_REFST reference range.

The first visual asset (810) may typically be defined in a similar manner, but for simplicity we will assume it is a legacy visual asset which can already be pre-written into the composition (e.g. it comprises PQ luma-defined luminances up to 2000 nit, so one can allocate the pixel luminances trivially in a combination range if one presets the maximum of that range to ML_C=2000 nit.

At any time needed (e.g. upon a user mouse click, or gaze fixing), the compositor can read the appropriate state-specific luminance mapping function via function input 855.

The compositor comprises a state establishing circuit (851) arranged to establish a current state (CurST) of the second visual asset, which may in various embodiments be a circuit that checks or monitors a state of the asset (or corresponding internal parameter of a program), receives some state value, e.g. via a data input (881) which may be connected via a network, e.g. the internet, to a server (880), or set the new state itself. An example of server side control of the state of an asset may be if e.g. one of the videos in the browsers gets a promotion, and is downloadable at 50% of the original price.

Let's assume it is determined that the current state (CurST) is the second (internal) state STLAB2int (and not the first internal state STLAB1int). This state may be "selected". Function reading circuit (852) is arranged to check whether there is a similar state label present in the asset (i.e. typically there some function labelled to be used for showing a state change of the asset to the selected state, which is indicated by second asset state label STLAB2="selected"; third asset state label STLAB3 may also be "selected", but for the wrong reference range maximum luminance, and first asset state label STLAB1 is the wrong label since it corresponds to the "default" i.e. unselected state) and then read the state-specific luminance or luma mapping function (FL_STSP) from the asset which satisfies the requirement that it has a state label that corresponds to (because it has an identical state as) the current state. The innovative visual asset will have a state-specific function for at least a first visual asset state 821 (STLAB1), and a second visual asset state 822, but there may be more states and functions e.g. third visual asset state 823. That corresponding state-specific luminance mapping function FL_STSP, which in the current example would be FL_SEL_2K, is then communicated to a color transformation circuit (853) for using the function in the color transformation. The details of the color transformation are not crucial to understand the present innovation. There may be various color definitions at the input (and output), and used as internal color definition. For elucidation we will assume that the color transformation unit uses an internal (luminance, hue, saturation) color definition, and it simply applies the luminance function to the input luminance of any pixel, to obtain a corresponding output luminance. That would be the simple case if we have an asset that can be transformed from whatever luminance values the pixels have (e.g. up to 570 nit), to the reference range for coordination (e.g. the 570 nit maximum in the asset coding ImCOD1 may be mapped to the value 2000 nit). If the combination range also has a maximum ML_C of 2000 nit, the final mapping to colors ready for geometric composition is then easily elucidated. That mapping may be implemented as two steps: asset original colors to reference range mapping, and then reference range mapping to combination range mapping, which would in this simple elucidation example be an identity transform on the luminances and color triplets typically, and those two steps could be combined as one step, after preparing the math into a total equation. As we will see below, based on this new technical principle of state-dependent luminance mapping functions in the asset, one can also map to reference or combination ranges that are different from the 2000 nit range used in the asset. Finally a mapped asset (AsMP) comes out, having mapped first color ColM1(x1, y1), and mapped second color ColM2(x2, y2), which would be in a format typically ready to be written in the appropriate memory locations of the geometric composition. E.g. if that composition is defined as float RGB, the internal (luminance, hue, saturation) mapped value, i.e. on the combination range RNG_C, may still be color converted to an equivalent float RGB triplet of values (which codes for exactly the same color having the same luminance value on that combination range). Finally, a geometric composition circuit (854) is arranged to realize the geometric positioning of the pixel colors, e.g. map them to a 3D surface in one of the rooms of a virtual world etc., and via an output 857 the full composition comp may be e.g. stored in a memory 860 (or communicated over a wire, or wireless communication path, etc.).

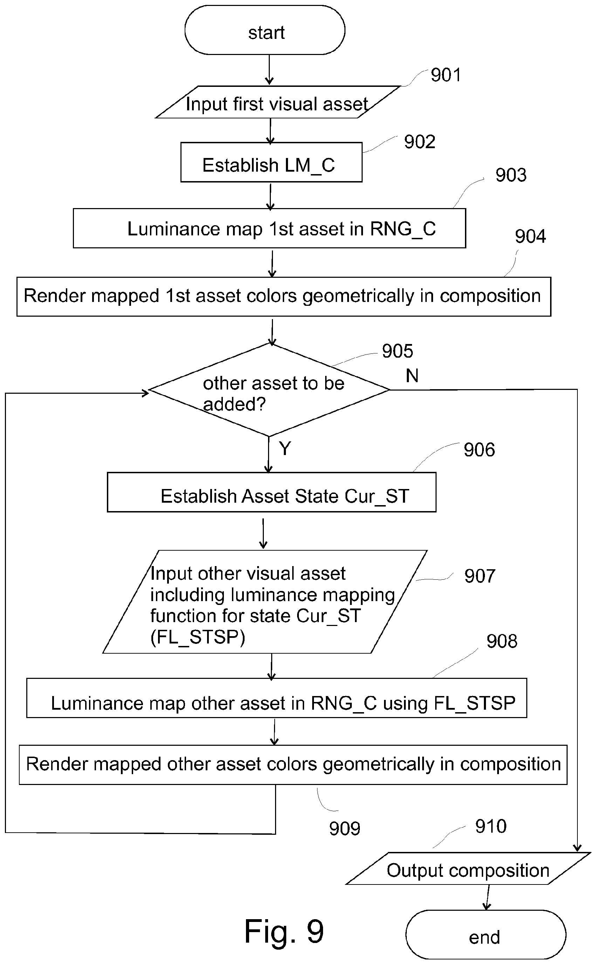

**Fig. 9** shows an example of a process flow chart of a method of composition following at least one embodiment of the present innovation.

Between the start and end symbols (rounded rectangles), the various steps of the method are elucidated, in general.

In first asset input step 901, at least a first visual asset is inputted, the specifics of which depend on the embodiment (e.g. read from a memory, received as a bitstream from internet, etc.). This would correspond to e.g. the dragon movie of Fig. 7B forming the foremost asset (e.g. corresponding to the movie of the robot shooting laser rays in Fig. 5). A second visual asset to be added to the luminance coordinated geometric composition a few steps later may e.g. be the user interface indicator 504, etc.

In combination range establishing step 902 the combination range will be established, that is, at least a combination range luminance maximum LM_C (as one can assume the minimum to be e.g. zero, or 0.1 nit). In some embodiments this establishing may be performed prior to the input of the first asset, but usually it may be advantageous to establish the range when one has at least one asset. E.g., one may not need to read any luminance mapping function, but simply determine LM_C based on the mastering display white point luminance this asset communicates, or the luminance of its brightest pixel, possibly raised by a margin, e.g. x1.5.

In first asset luminance mapping step 903, the luminances (and in general the colors, which color mapping may also involve chrominance or chromaticity mapping) of the asset pixels as they were originally, are mapped to appropriate values in the combination range (RNG_C). As said, in simple embodiments this may simply be a copy-paste retaining the original values as final values in the composition (also Cb, and Cr staying the same then typically, unless some color change for e.g. wide gamut may be needed). If however the first asset has larger luminances than the established LM_C, so compressive luminance mapping may be involved, e.g. based on a two reference grading linking luminance mapping function, which indicates how the various pixels of the original image spanning up to e.g. 5000 nit should ideally be re-graded to another dynamic range reference grading (e.g. the function indicating how to re-grade to 100 nit SDR, e.g. the exemplary function FLRG_Xto100 in Fig. 8; and then adaptation of the function similar to display adaptation can be done for mapping the 5000 nit maximum original luminances of the first asset to ML_C=2000 nit final luminances ready for geometric composition), this can be used as mapping.

Unless exemplified otherwise, we will assume the LM_C value to be 2000 nit (for simplicity of understanding, the skilled person of course understanding that other values are possible).

Next, in first asset geometric rendering step 904, the pixels having their final mapped color component values ergo luminances (final meaning regarding the formation of the composition, which may thereafter still undergo further processing like e.g. display adaptation, or other re-grading, transcoding, etc.). will be put in their needed geometric places, which details will depend on whether we are e.g. storing them in a buffer directly driving a 2-dimensional display, or in a memory that pre-stores everything about a 3D virtual environment as exemplified by Fig. 5.

The first part of the composition is now ready. For the photo-viewer or video selector example of Fig. 6 that would mean that the first image in its user interface window may now be visible by display, unless the composition is only shown after being finally ready as in the Fig. 9 flowchart example (note that we have taught composition composition step 910 generically, not merely display composition, as some applications may create compositions e.g. for storage and later display).

Note that we explain the partial composition generation for the first asset in a simpler to understand embodiment where the image coding is e.g. a 2D texture, e.g. rectangular. In case the pixels are written in memory locations corresponding to their position in the composition by some algorithm (e.g. an algorithm calculation cloudy patterns by mathematical equations), the math including the luminance mapping aspect may be as such that step 903 and 904 may be combined into one algorithm, however, often it may be useful to separate the image texture calculation from the luminance mapping, and therefore still first e.g. calculate sets of pixels representing plants in 2D projection or 3D, and thereafter process the colors of all those procedurally generated initial pixels by a luminance mapping step as 903 (so 904 and 903 may be swapped in processing order if the procedural calculation of a part of a geometry is already done in the correct position of the total geometric composition, e.g. in a standard initial color coding such as RGB float values).

In decision step 905 it is checked whether there are further assets to be processed (note that we assume the first time this check is run, the answer will be positive (Y), since otherwise we wouldn't be coordination at least two visual assets).

So if there is another asset to be added to the composition, the process continues according to the innovation.

In state establishing step 906, the state of the asset is established. We will assume, for now, that (just like the first asset, in this simplified example) it is in its default state. That is how the asset should be shown if nothing is going on (typically like one would show it just on its own), i.e. when the state hasn't become "selected", or "deprecated" or anything varying upon its foremost normal state.

In further visual asset input step 907 the data of the e.g. second visual asset will be e.g. read from a memory containing the data, or a signal coding the data, either being stored or received via e.g. the internet, broadcast, etc., or retrievable upon need from a server, etc. The visual asset data (as explained in Fig. 8) may include on the one hand data coding an **image part** or texture (either explicit e.g. YCbCr arrays, or an algorithm for calculating e.g. smoke, etc.), and on the other hand metadata for processing the image part, in particular luminance mapping functions (which may mathematically be represented as luma mapping functions, or just luminance-to-luminance functions). These luminance mapping functions will include at least two different luminance mapping functions, for at least two different states.

Since the internal state of the program or apparatus running the composition has determined the state for the other asset to be "default", the luminance mapping function having a state label equal to "default" in the metadata of the inputted visual asset will be read. Since first state label STLAB1 (821) of this asset is "default" (or a similar coding that the method can establish to be reasonably similar or the most appropriate of the available state labels), default luminance mapping function FL_DEF_2K will be read. If for simplicity for the moment we assume that the functions -on their reference state establishment range RNG_RF ending at reference maximum luminance ML_REFST, which need not be the same as ML_C- are also defined for ML_REFST=2000, one can simply apply the default luminance mapping function FL_DEF_2K for mapping all further asset luminances (e.g. up to 5000 nit) to the composition range, to create a second asset ready and in place in the partial composition.

Although we only elucidate this basic flow chart for the simplest situation, the skilled person can understand from it other scenarios. Suppose the state of the second (or another further) asset changes to "selected". An update or modification UI method following the principles of the invention can then use the same steps 905-909 to update e.g. only that image (so replacing only those pixels in the composition before outputting it again) in the photo browser that needs to be brightened because it was selected. In that scenario now in step 906 the method will establish that FL_SEL_2K will need to be used by further asset luminance mapping step 908. This step will map again according to any of the embodiments, e.g. it may simply apply the determined luminance mapping function (e.g. FL_DEF_2K) to the original pixel luminances to obtained the final mapped luminances (along i.e. within the combination luminance range RNG_C) for the composition for this further asset (chromas may be simply adjusted to account for the change in luminance, or undergo more advanced processing in other embodiments, but a core aspect is to have at least luminance mapping for the different states).

Thereafter again, in further geometric mapping step 909, the final mapped luminances (or the color components coding them in actuality, e.g. YCbCr, R'G'B', etc.) are used to geometrically map the pixel colors to their needed position, by e.g. warping, etc. After all assets have been added by the method (or apparatus) as required in composition output step 910 the composition may be written e.g. to some image buffer (memory).

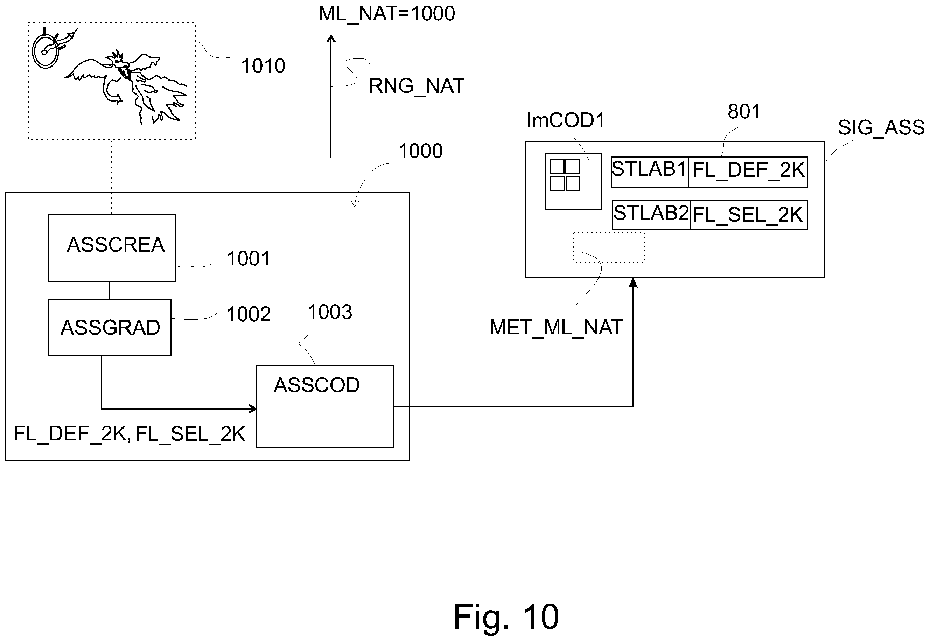

**Fig. 10** shows an embodiment of how a creator (often human, but it could be an automatic process) of the assets can create the innovative assets which are defined with two or more state-dependent luminance mapping functions, by using a visual asset encoding apparatus (1000). As described before, the asset will comprise some (straightforward pixel by pixel, or more complex algorithmic) encoding of a set of pixels, e.g. at least one triplet of image arrays of three additive color components (denoted here again by ImCOD1). This coding may generate a rectangular image, or a filling of a patch of some region in space (e.g. a triangle), or a set of pixels constituting a point cloud, etc.

An asset specification circuit (1001) is arranged to define the coding (ImCOD1). Which internal functionalities it has depends on the embodiment of the visual asset encoding apparatus. We will assume in the elucidation (without limitations) that this circuit comprises or is connected to user interface means to let a human define the asset. E.g., he may have color controls to influence the values of e.g. the internal RGB definition of one or more portions of pixel colors of at least one visual asset. He can e.g. view on at least one monitoring display (1010) -which is optional in case the apparatus is all automatic, e.g. generating the visual asset(s) via artificial intelligence- what the colors will be on e.g. a native asset dynamic range (RNG_NAT) for creating the asset, ending in a native asset maximum luminance ML_NAT (e.g. the dragon image, and a graphic). E.g., the creator may create all -or some- of his visual assets on a 1000 nit ML_NAT range (or 4000 nit), but define the state-dependent functions on an output range of ML_REFST (so he creates the video having e.g. the brightest glint in the dragon's eye being a 4000 nit white color, however, he specifies how to make a darkened "unavailable" grading of the dragon on a 2000 nit maximum luminance range. It may be advantageous (though not in all embodiments necessary) if the signal coding of the visual asset, i.e. the visual asset representation signal (SIG_ASS), also contains a native maximum luminance metadata item ML_ML_NAT for indicating the situation to receivers (although the compositor circuit can also simply convert everything to the reference luminance range (RNG_RF).

The luminance mapping function determination circuit (1002) can be used to create suitable luminance mapping (re-grading) functions for the various assets, to e.g. the 2000 nit maximum reference range, starting from whatever the color definition was of the created assets by using circuit 1001. Examples below elucidate which kinds of functions one can typically define. This circuit 1002 can again work autonomously, by checking e.g. which colors are present in the asset and mapping them below some reference level on the reference range, or, functions may be created by a human grader, and he may again look at the visual impact on the monitoring display 1010.

The output of circuit 1002 will be at least two state-dependent luminance mapping functions, e.g. FL_DEF_2K for the default state, and FL_SEL_2K for the selected state.

An asset coding unit (1003) is arranged to code the coding (ImCOD1) and the first and second luminance or luma mapping functions in an asset representation signal (SIG_ASS) which it will output for receiving apparatuses comprising a compositor circuit. Appropriate labels need to be generated to tie to the functions (e.g. written in the coded data right before the codification of the function itself, which may be coded as a LUT, or mathematical equation parameters uniquely defining its shape, etc.). E.g. first state label STLAB1 may be set by the human aided by a software UI that makes him go through the definition of a number of typical states for an envisaged application. The same process may also be run by an automaton which knows (e.g. because it is fed at its input by a predefined list, and possibly further technical requirement data) it needs to define e.g. at least a dimmed "unavailable" state in addition to the normal "default" state, and some "highlighted" state which may in various applications making use of the innovative coding be mapped to internal states of e.g. "at discounted price" or "expiring soon", e.g. because the memory is running full or otherwise.

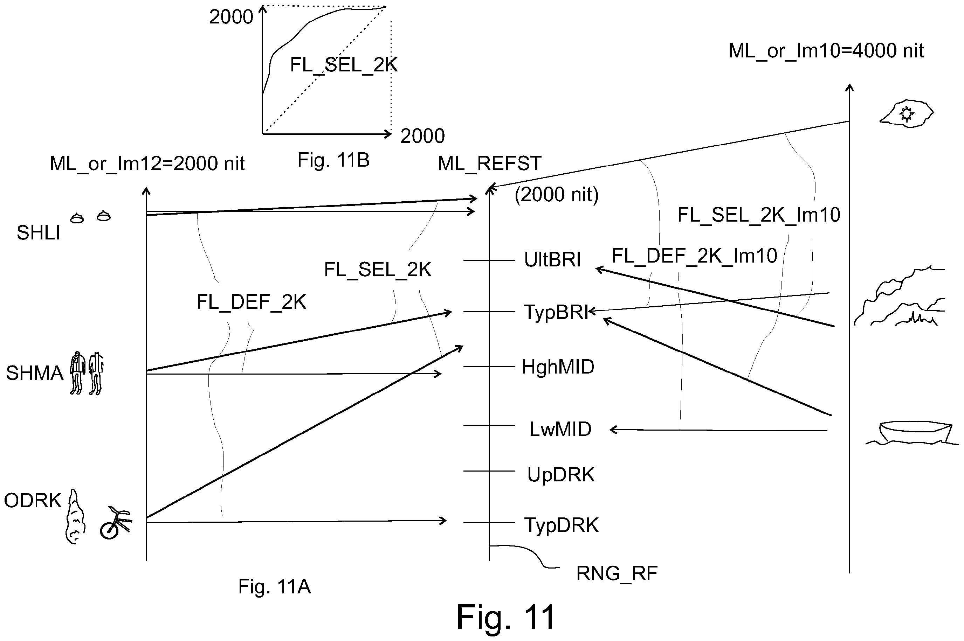

**Fig. 11** illustrates how one can make useful, conspicuous state-dependent luminance mapping functions. Fig. 11 A shows a luminance range-view, of how one can map the various object or pixel regions luminances of a first visual asset in this example being the shop window and nighttime bicycles image (Im12), and to be luminance-coordinated (for equal appearance of a common state that can be set for both assets) with a second visual asset which in this example is the sea and sunset image (Im10).

A first interesting aspect is that the native ranges of the assets, even if created by the same creator, may be different. First original asset maximum luminance (ML_or_Im12) is 2000 nit, whereas second original asset maximum luminance (ML_or_Im10) is as high as 3000 nit. But the creator(s), in this simpler first application scenario, know they will be mapping with their state-dependent luminance mapping functions to a common established reference range, having as highest definable/usable luminance 2000 nit (in this example).

This reference range (RNG_RF) may be sub-divided in visually useful regions. E.g., one will typically know what on such range will be used as typically averagely bright object pixel luminances, versus HDR highlight or effect luminances, and consequently which luminance will clearly look darker than all the rest (e.g. dark greys), and consequently can be used for indicating "unavailability" of an asset, etc.

So the reference range can be divided into subranges, or typical grey values, which will have some typical appearance and can therefore realize differential appearance. In some embodiments this could be agreed for the various reference ranges (e.g. the 2000 nit maximum range) between all creators, or any creator could just use it as a (possibly rough) guideline for shaping his functions.

E.g. "typical dark" (TypDRK) may be a dark grey value. It need not actually be a precise black, but can be a dark grey (e.g. 10% of a reference Lambertian white that the reference range mapped images may typically use may be a good value). One can then spread the various output luminances of pixels that have differential input luminance around that value, and consequently define an appropriate mapping function shape for unavailable state luminance mapping function (FL_UNAV_2K).

"Upper dark" level, may be an upper boundary for the dark or darkened image pixels. It may e.g. be used to map the brightest pixels of an input image (such as the light sources (SHL1), although if these contain only a few pixels the user would also quickly see the changed state if all other pixels became dark, but lowering the luminance of the brightest pixels may be a configurable balance between making those pixels look excessively bright compared to the rest of the image when re-graded to the unavailable state, however, although dimming the light sources entirely is not a bad look for an unavailable image it may be preferred to keep them somewhat brighter than UpDRK to still give the image an HDR appearance, also when not displayed in the default state.

The "low mids" (LwMID) level may be a level where the typical scene object pixels would be displayed luminance-wise, i.e. under the average predominant illumination prevailing in the HDR scene, and this level may correspond e.g. to a midpoint of the SDR (sub)gamut of reflecting colors under that lower illumination, which will typically show to the viewer as a dark, normally lit color. High mids "HighMID) can be used for the upper half midpoint of that subgamut, i.e. colors that look relatively light under the predominant illumination. A level of typical bright scene colors "TypBRI" may be used to display colors that are quite somewhat brighter than the predominant SDR colors in the uniform (base light) illuminated part of the scene image. E.g., it may be 10x brighter than the Lambertian white level. This would be the level where one wants to render e.g. lit shop windows, i.e. in the example it is where the brightly lit mannequins (SHMA) may map. A much brighter level UltBRI can also be pre-specified. This would be to create very bright HDR effects, and have a value of e.g. 1000 nit or above on the 2000 nit max. reference range. The skilled reader can understand that one may in some applications show the majority of the color of an image when mapped to the "selected" state towards the more modest TypBRI range e.g., as that would be sufficient for the viewer to reliably perceive the new user interface visual feedback situation, and is not so excessive and image-look-distorting as a mapping all the way up to UltBRI.

We see that for both images, it may make sense to define a selected-state luminance mapping function FL_SEL_2K so that the viewer readily sees that all image pixels are above typical brightness. That may consistently be done when the various creators define functions which mostly raise the luminance of the dark image regions, such as of the dark tree and bicycle pixels (ODRK). The same would typically happen to the darkest objects of the other image (the boat), although such objects may be brighter in the original grading of that image, however, it is the final mapped pixel luminance of the selected-state re-grading that one wants to give similar appearance, so that all selected images can be readily discerned.

As regards the default mapping function FL_DEF_2K, since we elucidate this first example in the simplest manner where the first asset has the same maximum luminance as the reference range (2000 nit), this function may simply be an identity transform. Ergo, each time a compositor needs to make a 2000 nit max. common representation, if the asset is in its default state it simply needs to copy the original color triplet values of the ImCOD1 of the asset (however they are defined, they will code the correct luminance). That will then also work appropriately when having various further color transformations, such as e.g. display adaptation.

For the second original asset maximum luminance (ML_or_Im10) 4000 nit image the second asset default mapping function (FL_DEF_2K_Im10) will need to down-grade the brightest luminances (of the sunlit clouds) to the 2000 nit maximum, but the creator can easily define such a function, and more importantly as per the present innovation, store it with the "default" label into the visual asset representation signal (SIG_ASS). Similarly, he can define the second asset selected-state luminance mapping function (FL_SEL_2K_Im10), which will take into account both the luminances present in this at least one image (or for a video it may e.g. be done per scene, or for the entire video), and importantly, the output luminances that should look excessively bright, to give the image a high brightness only appearance.

Fig. 11B shows what a typical mapping function shape will look like for a "selected" state in a luminance-luminance 2D plot: we see there may e.g. be a strong offset for pure black (zero luminance), and/or a large slope for the darkest luminances, so that all luminances are quickly mapped in a high-up sub-range of the output range being the 2000 nit reference range (RNG_RF). The plot is for the Im12 image, but the skilled person can understand how a 4000 nit input plot (horizontal axis) may look similar.

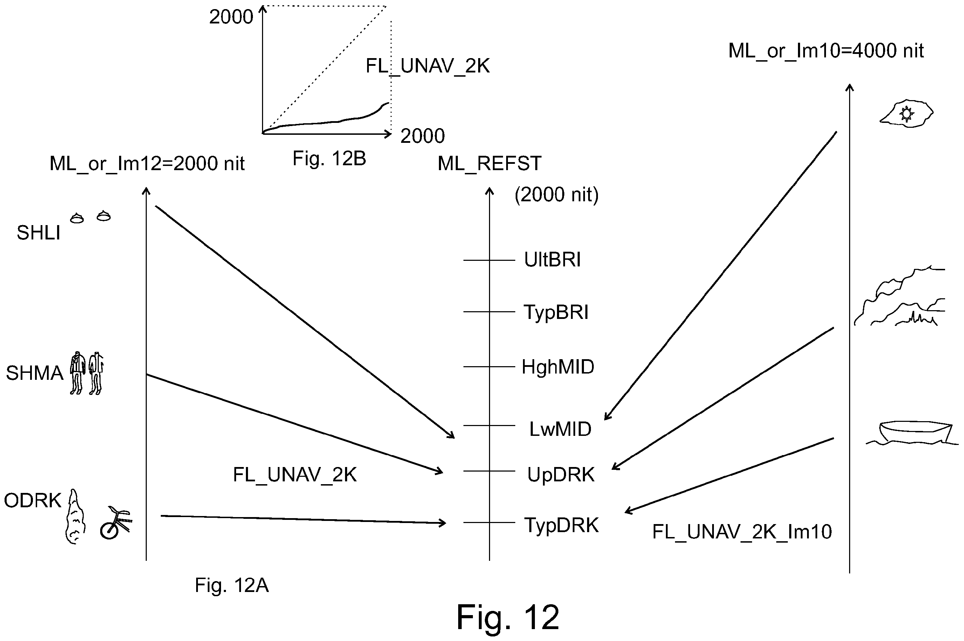

In **Fig. 12** we elucidate another possible state-dependent luminance mapping function specification, namely a darkening which implements the visual feedback for the "unavailable" state (e.g.). Now we see in luminance ranges sub-figure Fig. 12A that all image objects, no matter how bright on their native range, may be mapped e.g. all below the LwMID level (and only the HDR highlight objects actually become as bright as LwMID, where the rest maps well below; this is just an elucidation example, of course other functions may be specified, and communicated in the visual asset signal). When this function property is implemented both for the first asset unavailable state luminance mapping function (FL_UNAV 2K) and the second asset unavailable state luminance mapping function (FL_UNAV_2K_Im10), those two image will have on the one hand a similar look, and more importantly, a common look which is clearly different from how any image would be displayed in its default state (in which it would have some bright pixel regions, certainly for an all-HDR image viewer or in general composition).

Fig. 12B again shows a typical shape of an unavailable-state function on the 2D plot (shape of a function e.g. definable by its projected distance from the diagonal in a plot where input and output axis have a common (original or normalized onto each other) maximum).

Until now we have kept things simple, and only explained how state-dependent functions can be created, for storage or communication of a visual asset.

A next question is what a compositor can do with this information, to in a reasonably predictable manner make luminance-coordinated compositions.

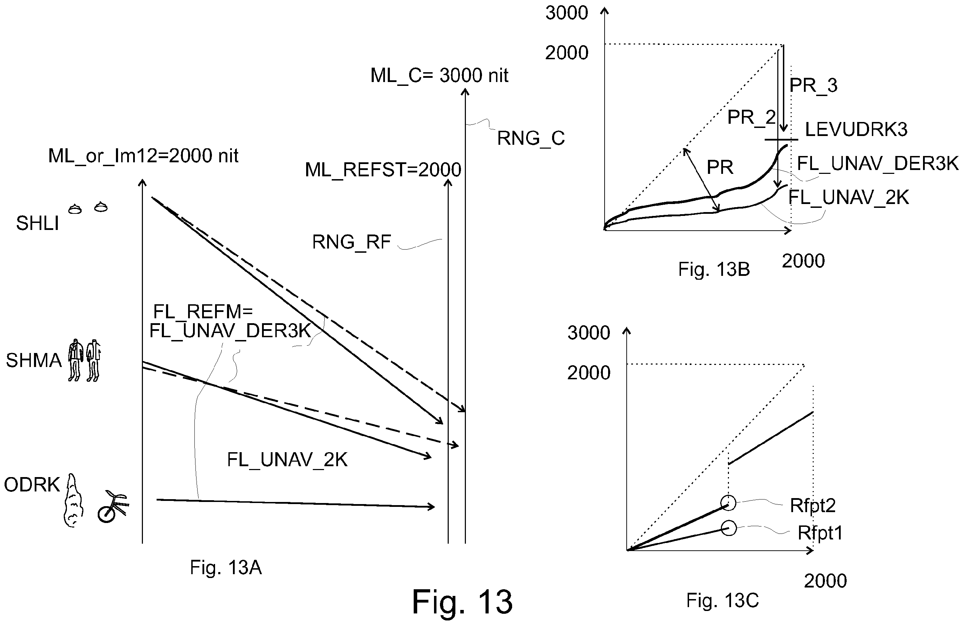

As **Fig. 13** elucidates, it need not be so that the maximum of the composition range that the compositor wants to use (ML_C=3000 nit) is the same as the maximum of the reference range on which the state-dependent luminance mapping functions were defined, even if all asset creators use the same (e.g. universally agreed e.g. by means of standardization) reference range (having ML_REFST = 2000 nit in our elucidation).

However, algorithms can be specified to transform the functions into similarly shaped functions of stronger or weaker re-mapping behavior if the needed output range is larger or smaller. That would be somewhat similar to what we showed in Fig. 11: if an image has a higher maximum luminance originally (i.e. at its input) than the output maximum luminance one needs to do compression, whereas if the two are the same one can do an identity transform (and similar technical conditions can be specified for up-grading from lower dynamic range images).

So one can e.g. formulate that requirement by using some fixed algorithm which transforms input functions into output functions. If the input range has a higher maximum luminance than the output range and the amount of excess height descreases, one can calculate with the pre-determined algorithm a function which lies closer to the diagonal which represents the identity transform, i.e. the output function lies in between the input function and the diagonal as shown in Fig. 13B.

And since the various slopes and positions on the curve where the slope changes have semantic meaning (they are defined by the fact that the input image contained e.g. bright mannequins, and that, even for such an image-look-distorting mapping, the creator wanted the mannequins to map to some position of the output range, i.e. the reference range, to e.g. still give them some retained luminance contrast compared to the nighttime street surrounding pixels. Ergo, when calculating the output function, one may want to care about those specifics in the determined (and co-communicated) state-specific function shape, ergo, one may design the algorithm in some advantageous embodiments to be shape-preserving. But, on a larger dynamic range the ranges of the darks, ultrabrights, etc. may shift and stretch, hence so should advantageously do the calculated scaled output state-dependent luminance mapping function of the function adaptation circuit or algorithm. This algorithm may be run in color transformation circuit 853 (i.e. in some embodiments that may apply directly the read state-dependent luminance mapping function, and in other embodiments or applications it may apply to the input asset colors an adapted state-dependent luminance mapping function which depends on the read state-dependent luminance mapping function).

We show the adaptation on a luminance ranges plot in Fig. 13A. The adapted reference luminance or luma mapping function (FL_REFM), which in this case is a state-dependent mapping function for mapping to a 3000 nit range (FL_UNAV DER3K), is based on the originally communicated in the asset and read state-dependent function (FL_UNAV_2K), created as elucidated above.

We see indeed that one may want to follow the down-mappings (projection arrows) of the various pixel luminances of typical image objects, however, onto the new brighter maximum luminance range one may keep the output luminances on the combination range a little brighter.

Although there can be various manners to define such an algorithm (and the core of the present innovation is not limited to specific details of the function adaptation algorithm of the color transformation circuit) pragmatic easy algorithms can base the function adaptation on the scaling of projections PR (under a certain pre-defined angle) of any point on the input function locus towards the diagonal. One can understand how one in such a manner can indeed make stronger functions, or e.g. weaker functions, that will down-grade less as in the example of Fig. 13A (i.e. more similar to the identity transform). In Fig. 13B we elucidate an example using vertical projection. The original function (FL_UNAV 2K) mapped (in the example original luminances of the asset pixels up to 2000 nit, shown as endpoint of the horizontal axis, or range) luminances to an output range up to 2000 nit, which would be the reference range, but also the maximum of the composition range in a simple example where those two would have the same maximum. But now we need to map those same visual asset luminances (that part of their coded colors) to a larger combination range, going as high as 3000 nit. So what is seen as clearly darkened, as a visual feedback, may be a brighter value. The compositor may prescribe e.g. a darkening level LEVUDRK3, which it finds a suitably visually darkening luminance value, e.g. it may be the UpDRK or LwMID level for the 3000 nit maximum range. One can again see that output stretch of the endpoint as a ratio of the lengths of original (vertical) projection from the diagonal (PR2) and adapted projection from the diagonal (PR3), which function and projection ends at LEVUDRK3. Assume that the length of PR3 is e.g. 80% of the length of PR2. One can then obtain a shape-preserving adapted function (FL_UNAV_DER3K) by shrinking the vertical projections of all points on the locus of the original function towards the diagonal, to the same 80%. It is not only possible to use continuous mapping functions. Fig. 13C uses another example where there is a discontinuity between two partial mapping functions for sub-ranges of the input range, which position of the discontinuity may be controlled by node parameters of the functions definition (e.g. communicating in the asset for this function definition a horizontal and/or vertical coordinate value of the at least one node; the second segment may be attached or start some differential luminance above the node). One can similarly scale/adapt such functions, e.g. by changing those nodes, e.g. the height of the node above the horizontal axis, or the distance from the diagonal, and change reference node Rfpt1, e.g. of the original function specification data as received in the visual asset, into a value to be used RfPt2, to map to e.g. a 3000 nit combination range.

The reader learns from these various examples that creators can, by using some reference range both create stable absolute representations of their assets (even if those were initially to be relative), and create once having such absolute positions relative changes in the luminance appearance of the displayed assets again.

Once all luminances have been mapped for the various assets on the combination range, the rest of the processing is merely geometrical (e.g. one may use a spherical mapping equation to position the correctly colored pixels on a globe somewhere in 3D space).

However, we want to teach one more thing that apparatuses, systems or methods following the technical principles or insights of the present innovation can do.

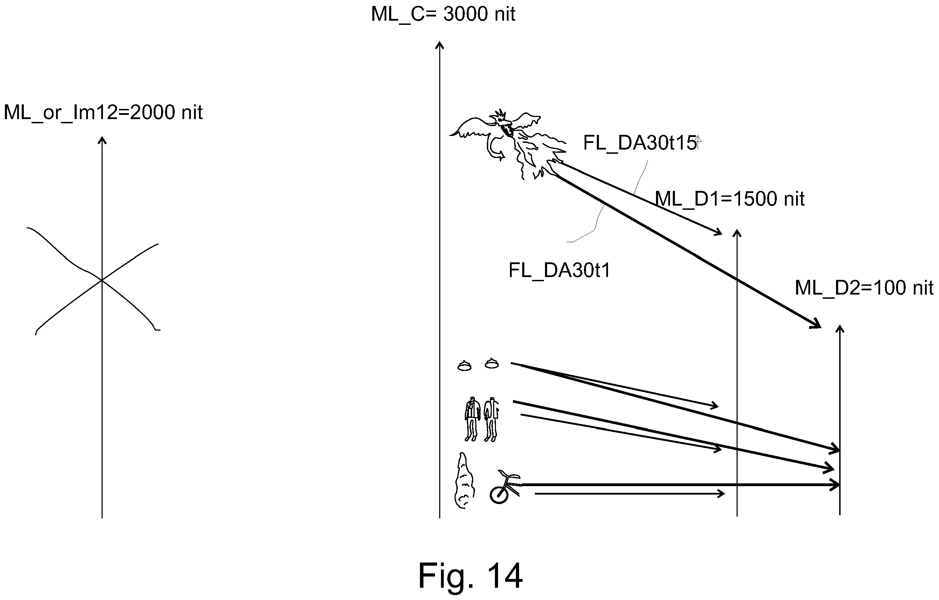

As explained in the introduction, one may want to make a composition, but, although one could immediately combine for some specific display capability, it may occur that the composition is a common composition, which is still not optimal for the various end-user displays. In **Fig. 14** we show how the present techniques make it elegant to do display adaptation.

Once composed, the technical system can forget about the original aspects and data (hence the cross through the luminance range on the left). One can now simply display adapt, e.g. to a 100 nit SDR end-user display, or a 1500 nit end-user display, by using display adaptation algorithms on some re-grading function which is found suitable to re-grade e.g. 3000 nit combination range images to 100 nit SDR secondary reference images. This function may either be determined autonomously in the receiving apparatus (e.g. in the compositor, as a last display adaptation circuit working on the comp output and prior to yielding final for display image output), or, it may be based on guidance re-grading functions which may also be communicated with the assets (i.e. the display adaptation based on FLRG_Xto100). Although in principle one could still give each asset in its default state its own optimal display adaptation, it is preferable that the compositor or the apparatus containing it will apply a single display adapting luminance mapping function to all assets in the composition (i.e. the possible luminances of any part of the composition will fall between e.g. 0.1 and 3000 nit, and any pixel will get display-adapted based on the output result of a single first display adaptation function (FL_DA30t15) when adapting to a 1500 nit (first display maximum luminance ML_D1) end-user display (or a second display adaptation function (FL_DA30t1) when making a final image for a 100 nit (second display maximum luminance ML_D2) connected SDR tv, monitor, projector, or the like. When various assets have differently shaped functions indicating different re-grading needs, the compositor can determine a final (aggregate) function by looking at what the various functions do, e.g. by taking average mapping behaviour for various ranges (e.g. an average boost for the darkest colors of the various assets), or a coordination between the luminance level of certain HDR bright effects, e.g. dimming down the brightest HDR desiderata of the most demanding HDR assets to the more moderate level of the other HDR bright regions or vice versa. The details of specific display adaptation algorithms to use are beyond the needs of elucidating the present innovation. The skilled person can learn that the created coordination between the various luminance looks of the assets being in different states, will sufficiently be retained also after the display adaptation.

The algorithmic components disclosed in this text may (entirely, or in part) be realized in practice as hardware (e.g. parts of an application specific integrated circuit) or as software running on a special digital signal processor, or a generic processor, etc. At least some of the elements of the various embodiments may be running on a fixed or configurable CPU, GPU, Digital Signal Processor, FPGA, Neural Processing Unit, Application Specific Integrated Circuit, microcontroller, SoC, etc. E.g. complex operations which determine an optimal shape of a mapping function may be performed in firmware, whereas the pixel processing pipeline, which does elementary operations on each and every pixel, e.g. mapping a luminance of that pixel to a resultant luminance for output, may be done in a hardware circuit. Some of the processing may happen on disjunct systems, e.g. as a cloud service. The term circuit is not intended to be limited to some fixed pre-designed circuit which can do only one (baked in) calculation, but may be a configurable circuit of which the processing can be adjusted by firmware, software, and the like. The images may be temporarily or for long term stored in various memories, in the vicinity of the processor(s) or remotely accessible e.g. over the internet. Other memories may contain one or more instructions for configurating or reconfigurating parts of the computations or the processing elements of a processing chain.

It should be understandable to the skilled person from our presentation which components may be optional improvements and can be realized in combination with other components, and how (optional) steps of methods correspond to respective means of apparatuses, and vice versa. Some combinations will be taught by splitting the general teachings to partial teachings regarding one or more of the parts. The word "apparatus" in this application is used in its broadest sense, namely a group of means allowing the realization of a particular objective, and can hence e.g. be (a small circuit part of) an IC, or a dedicated appliance (such as an appliance with a display), or part of a networked system, etc. "Arrangement" is also intended to be used in the broadest sense, so it may comprise inter alia a single apparatus, a part of an apparatus, a collection of (parts of) cooperating apparatuses, etc. Some apparatuses may be connected to displays or contain displays.

The computer program product denotation should be understood to encompass any physical realization of a collection of commands enabling a generic or special purpose processor, after a series of loading steps (which may include intermediate conversion steps, such as translation to an intermediate language, and a final processor language) to enter the commands into the processor, and to execute any of the characteristic functions of an invention. In particular, the computer program product may be realized as data on a carrier such as e.g. a disk, data present in a memory, data travelling via a network connection -wired or wireless. Apart from program code, characteristic data required for the program, such as e.g. control data, may also be embodied as a computer program product. Some of the technologies may be encompassed in signals, typically control signals for controlling one or more technical behaviors of e.g. a receiving apparatus, such as a television. Some circuits may be reconfigurable, and temporarily configured for particular processing by software. Some parts of the apparatuses may be specifically adapted to receive, parse and/or understand innovative signals.

Some of the steps required for the operation of the method may be already present in the functionality of the processor instead of described in the computer program product, such as data input and output steps.

It should be noted that the above-mentioned embodiments illustrate rather than limit the invention. Where the skilled person can easily realize a mapping of the presented examples to other variants, we have for conciseness not mentioned all these options in-depth. Apart from combinations of elements of the invention as combined in the claims, other combinations of the elements are possible. Any combination of elements can in practice be realized in a single dedicated element, or split elements.

Any reference sign between parentheses in the claim is not intended for limiting the claim. The word "comprising" does not exclude the presence of elements or aspects not listed in a claim. In several situations the word "portion" of a set of elements is not intended to exclude that portion may also cover the totality of the elements, because that may function equally in a same manner. The word "a" or "an" preceding an element does not exclude the presence of a plurality of such elements, nor the presence of other elements. "And/or" means that both options may be present together, or one of them may be present alone. The word "e.g." is typically used to indicate that we mean that something else is also belonging to the possibilities, e.g. a similar element, example, or teaching. "i.a." means inter alia, or among others. An element between ellipses "0" will normally be used to indicate that something is optional, i.e. at the same time saying the further aspect is also possible as a variant of a more general concept behind the ellipses, rather than necessary, e.g. (local) luminance boosting is intended to say, (primarily, as main level teaching) "luminance boosting" in general, which may be for all pixels the same, but may also be different, i.e. of the "local luminance boosting" variant, e.g. only applied to some locality of the image.

**Claims**

1. A compositor circuit (850) arranged to receive a first visual asset (810) and a second visual asset (800) and arranged to create a geometric composition (comp) of at least a first portion of pixels of the first visual asset (810) and at least a second portion of pixels a second visual asset (800), wherein at least the second visual asset comprises a coding (ImCOD1) which encodes a set of second pixel colors (Col1, Col2) for corresponding pixel positions ((x1,y1), (x2,y2)); and wherein at least the second visual asset comprises at least a first luminance or luma mapping function (FL_DEF_2K, 801) for transforming at least a luminance or luma of the second pixel colors when the second visual asset is to be displayed as being in a first state (STLAB1int), and a second luminance or luma mapping function (FL_SEL_2K, 802) for transforming at least the luminance or luma of the second pixel colors when the second visual asset is to be displayed as being in a second state (STLAB2int), wherein the first and second luminance or luma mapping function are specified to yield re-mapped reference first pixel colors respectively reference second pixel colors on a reference luminance range (RNG_RF);

   wherein the first and second luminance or luma mapping function of the second visual asset are identifiable as associated with respectively a first state and a second state;
   wherein the compositor comprises:

      - a state establishing circuit (851) arranged to establish a current state (CurST) of the second visual asset;
      - a function reading circuit (852) arranged to read a state-specific luminance or luma mapping function (FL_STSP) from the asset which satisfies the requirement that its associated state corresponds to the current state;
      - a color transformation circuit (853) arranged to use the state-specific luminance or luma mapping function (FL_STSP) to transform the second pixel colors into mapped second pixel colors (ColM1, ColM2) having luminances within a combination luminance range (RNG_C), and arranged to map first colors of the first visual asset to mapped first pixel colors within the combination luminance range (RNG_C); and
      - a geometric composition circuit (854) arranged to allocate the mapped first pixel colors to first asset pixel positions in the geometric composition (comp) and to allocate the mapped second pixel colors to second asset pixel positions in the geometric composition, and arranged to output the geometric composition.

2. The compositor circuit (850) as claimed in claim 1 wherein the first and second state of the second visual asset are internal states of a program according to some enumerable variable, for which visual feedback is to be given by means of a luminance change of the second visual asset in a user interface.

3. The compositor circuit (850) as claimed in claim 2, in which a current state of the second visual asset changes to another state due to interaction of the user with a rendering of the second visual asset in a location of the composition.

4. The compositor circuit (850) as claimed in claim 2, in which a current state of the second visual asset changes due an information update regarding the second visual asset state received over a data input (881) which connects via a network to a server (880).

5. The compositor circuit (850) as claimed in claim 1, arranged to handle visual assets of at least one type from a set comprising: a still image, a video of images, a graphic, a three-dimensional object, a texture for geometric mapping onto a three-dimensional object, a point cloud of HDR pixel colors and an algorithm for calculating a set of colors at pixels positions in a two-dimensional or three-dimensional space.

6. The compositor circuit (850) as claimed in claim 1, arranged to create the geometric composition (comp) being at least one of a set comprising: a two-dimensional rectangular or non-rectangular region of pixels, a three-dimensional set of pixels, and a world comprising of a set of locations comprising two or three-dimensional pixel sets.

7. The compositor circuit (850) as claimed in claim 1, wherein at least the second luminance or luma mapping function is associated with a second state label (STLAB2).

8. The compositor circuit (850) as claimed in claim 1, arranged to read from the second visual asset a species of the coding (ImCOD1) which comprises three arrays of three additive color components for different pixel positions.

9. The compositor circuit (850) as claimed in claim 1 in which the color transformation circuit (853) is arranged to directly apply the state-specific luminance or luma mapping function (FL_STSP) to luminances respectively lumas of the second pixel colors to obtain mapped luminances respectively lumas of the mapped second pixel colors (ColM1, ColM2).

10. The compositor circuit (850) as claimed in claim 1 in which the color transformation circuit (853) is arranged to apply an adapted reference luminance or luma mapping function (FL_REFM) which is based on the state-specific luminance or luma mapping function (FL_STSP) to the luminances respectively lumas of the second pixel colors.

11. A visual asset encoding apparatus (1000) for creating and encoding a visual asset which comprises a coding (ImCOD1) which encodes a set of pixel colors (Col1, Col2) for corresponding pixel positions ((x1,y1), (x2,y2)) of the visual asset, and at least a first luminance or luma mapping function (FL_DEF_2K) for transforming at least a luminance or luma of the pixel colors when the visual asset is to be displayed as being in a first state, and a second luminance or luma mapping function (FL_SEL_2K) for transforming at least the luminance or luma of the pixel colors when the visual asset is to be displayed as being in a second state, wherein the visual asset encoding apparatus comprises:

- a asset specification circuit (1001) to define the coding (ImCOD1);
- a luminance mapping function determination circuit (1002) arranged to determine the first and second luminance or luma mapping functions; and
- an asset coding unit (1003) arranged to code the coding (ImCOD1) and the first and second luminance or luma mapping functions in an asset representation signal (S1G_ASS), wherein the states are selected from a set representing states of a program which uses those states to represent a change in a parameter which needs to be visually communicated to a user in a user interface.

12. The visual asset encoding apparatus (1000) as claimed in claim 11, wherein at least the second luminance or luma mapping function (FL_SEL_2K) is associated with a state label (STLAB2).

13. The visual asset encoding apparatus (1000) as claimed in claim 12, wherein the visual asset and its coding is one of a set comprising: a still image, a video of images, a graphic, a three-dimensional object, a texture for geometric mapping onto a three-dimensional object, a set of points in a three-dimensional environment which points have colors, and an algorithm for calculating a set of colors at pixels positions in a two-dimensional or three-dimensional space.

14. The visual asset encoding apparatus (1000) as claimed in claim 11, wherein the first luminance or luma mapping function (FL_DEF_2K) and the second luminance or luma mapping function (FL_SEL_2K) are specified to map luminances of the pixel colors (Coll, Col2) to positions of a reference luminance range (RNG_RF) which has a selected reference maximum luminance (ML_REFST).

15. A visual asset representation signal (SIG_ASS) comprising:

- a coding (ImCOD1) which encodes a set of pixel colors (Col1, Col2) for corresponding pixel positions ((x1,y1), (x2,y2)) of the visual asset; and
- a first luminance or luma mapping function (FL_DEF_2K) linked to a first state label (STLAB1) or other state identifier which indicates that this function is for transforming at least a luminance or luma of the pixel colors when the visual asset is to be displayed as being in a first state corresponding to this first state label, and
- a second luminance or luma mapping function (FL_SEL_2K) linked to a second state label (STLAB2) or other state identifier which indicates that this function is for transforming at least a luminance or luma of the pixel colors when the visual asset is to be displayed as being in a second state corresponding to this second state label, wherein the state labels are selected from a set representing states of a program which uses those states to represent a change in a parameter which needs to be visually communicated to a user in a user interface.

16. The visual asset representation signal (SIG_ASS) as claimed in claim 15 in which the second luminance function is defined to implement a mapping which maps an average of a set of the asset pixel luminances to a value below a first representative luminance on a reference luminance range (RNG_RF) or a value below a second representative luminance on the reference luminance range (RNG_RF).

17. A method of composing two visual assets in a geometrical composition (comp) comprising:

- receiving (910) a first visual asset (810) and receiving (907) a further visual asset (800);
- establishing (902) a combination luminance range (RNG_C) which has as highest luminance a combination range luminance maximum (LM_C);
- mapping (903) the first colors of the first visual asset to mapped first colors to have their luminances fall within the combination luminance range (RNG_C);
- establishing (906) a current state (Cur_ST) for the further visual asset (800);
- reading a state-specific luminance mapping function (FL_STSP) from the further visual asset which has a state which corresponds to the current state (Cur_ST), wherein the further visual asset comprises at least two state-specific luminance mapping functions for two different states of the further visual asset corresponding to an internal parameter of a program;
- luminance mapping (908) a set of second pixel colors (Col1, Col2) of the further visual asset by using the state-specific luminance mapping function (FL_STSP) to map at least luminances of the second pixel colors, to obtain mapped second pixel colors (ColM1, ColM2);
- geometrically mapping (904) at least a first portion of the mapped first pixel colors to positions in the geometric composition (comp) for pixels of the first visual asset;
- geometrically mapping (909) at least a second portion of the mapped second pixel colors to positions in the geometric composition (comp) for pixels of the second visual asset; and
- outputting (910) the geometric composition (comp).

Fig. 1 A

Fig. 1B

Fig. 1D

Fig. 1C

Fig. 1

Fig. 2

Fig. 3A

Fig. 3B

Fig. 3C

Fig. 3

Fig. 4A

Fig. 4B

Fig. 4

EP 4 657 423 A1

Fig. 5

Im00

Im01

Im02

Im10

Im11

Im12

601

Fig. 6

EP 4 657 423 A1

Fig. 7A

Fig. 7

Fig. 7B

Fig. 8

Fig. 9

Fig. 10

Fig. 11

Fig. 11A

Fig. 11B

ML_or_lm10=4000 nit

ML_REFST
(2000 nit)

ML_or_lm12=2000 nit

FL_SEL_2K_lm10

FL_DEF_2K_lm10

FL_SEL_2K

FL_DEF_2K

FL_SEL_2K

2000

2000

UltBRI

TypBRI

HghMID

LwMID

UpDRK

TypDRK

RNG_RF

SHLI

SHMA

ODRK

Fig. 12

Fig. 12A

Fig. 12B

Fig. 13A

Fig. 13B

Fig. 13C

Fig. 13

EP 4 657 423 A1

ML_or_Im12=2000 nit

ML_C= 3000 nit

FL_DA30t15

ML_D1=1500 nit

FL_DA30t1

ML_D2=100 nit

Fig. 14

EP 4 657 423 A1

# EP 4 657 423 A1

Europäisches
Patentamt

European
Patent Office

Office européen
des brevets

## EUROPEAN SEARCH REPORT

Application Number

EP 24 17 8712

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/193935 A1 (VAN DE KERKHOF LEON MARIA [NL] ET AL) 18 June 2020 (2020-06-18) * paragraphs [0066] - [0102] * ----- | 1-17 | INV. G09G5/02 H04N21/434 H04N21/435 H04N21/84 |
| A | US 2018/322679 A1 (KUNKEL TIMO [US] ET AL) 8 November 2018 (2018-11-08) * paragraphs [0026] - [0102] * ----- | 1-17 | |
| A | US 2016/307602 A1 (MERTENS MARK JOZEF WILLEM [NL]) 20 October 2016 (2016-10-20) * paragraphs [0020] - [0033], [0121] - [0130] * ----- | 1-17 | |

TECHNICAL FIELDS
SEARCHED (IPC)

G09G
H04N

The present search report has been drawn up for all claims

| Place of search | Date of completion of the search | Examiner |
|---|---|---|
| The Hague | 7 November 2024 | Hardell, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 8712

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2024

| Patent document cited in search report | | Publication date | Patent family member(s) | | Publication date |
|---|---|---|---|---|---|
| US 2020193935 | A1 | 18-06-2020 | CN | 111386709 A | 07-07-2020 |
| | | | EP | 3451677 A1 | 06-03-2019 |
| | | | EP | 3679725 A1 | 15-07-2020 |
| | | | JP | 7419230 B2 | 22-01-2024 |
| | | | JP | 2020532805 A | 12-11-2020 |
| | | | JP | 2024036351 A | 15-03-2024 |
| | | | US | 2020193935 A1 | 18-06-2020 |
| | | | WO | 2019048420 A1 | 14-03-2019 |
| US 2018322679 | A1 | 08-11-2018 | CN | 105009567 A | 28-10-2015 |
| | | | EP | 2959676 A1 | 30-12-2015 |
| | | | EP | 3783883 A1 | 24-02-2021 |
| | | | JP | 6104411 B2 | 29-03-2017 |
| | | | JP | 6426220 B2 | 21-11-2018 |
| | | | JP | 6621898 B2 | 18-12-2019 |
| | | | JP | 6833953 B2 | 24-02-2021 |
| | | | JP | 2016515327 A | 26-05-2016 |
| | | | JP | 2017127007 A | 20-07-2017 |
| | | | JP | 2019033531 A | 28-02-2019 |
| | | | JP | 2020043586 A | 19-03-2020 |
| | | | KR | 20150108911 A | 30-09-2015 |
| | | | KR | 20170039764 A | 11-04-2017 |
| | | | KR | 20190052173 A | 15-05-2019 |
| | | | PL | 3783883 T3 | 11-03-2024 |
| | | | US | 2018322679 A1 | 08-11-2018 |
| | | | US | 2020074710 A1 | 05-03-2020 |
| | | | WO | 2014130213 A1 | 28-08-2014 |
| US 2016307602 | A1 | 20-10-2016 | NONE | | |

EPO FORM P0459

For more details about this annex : see Official Journal of the European Patent Office, No. 12/82

**REFERENCES CITED IN THE DESCRIPTION**

**Patent documents cited in the description**

- WO 2017108906 A